# EUROPEAN PATENT SPECIFICATION

(11) **EP 3 080 952 B1**
(45) Date of publication and mention of the grant of the patent: **20.01.2021**
(21) Application number: 13811778.3
(22) Date of filing: 11.12.2013
(51) Int. Cl.: H04W 76/10, H04L 12/28

(54) **PRESENCE DETECTION IN BUILDING AUTOMATION SYSTEMS**
PRÄSENZERKENNUNG IN EINEM GEBÄUDEAUTOMATISIERUNGSSYSTEM
DÉTECTION DE PRÉSENCE DANS DES SYSTÈMES D'AUTOMATISATION DE BÂTIMENTS

(43) Date of publication of application: 19.10.2016
(73) Proprietor: VKR Holding A/S, 2970 Hørsholm (DK)
(72) Inventor: NIELSEN, Martin Sandal, DK-6830 Nørre Nebel (DK)
(74) Representative: Patentgruppen A/S
(86) International application number: PCT/DK2013/050426
(87) International publication number: WO 2014/029406

(56) References cited:
- WO-A1-2007/003186
- WO-A2-2006/057675
- US-A1- 2004 260 407
- US-A1- 2010 017 846
- US-A1- 2010 167 694

## Description

### Technical field

The invention relates to a method of controlling a building automation system, and a receiver for a building automation system.

### Background art

More and more building automation systems are installed in buildings. Such systems may be used for operating different parts/functionalities of a building such as light, windows, shading/screening devices, ventilation and maybe also access control, security and fire surveillance systems.

In the building automation systems, process variables such as building or room parameters or events for example may be detected, evaluated, monitored, influenced or generated, and the energy consumption of the building may also advantageously being optimized by the building automation system. To configure and use the system, for example users of the system and manufacturers of the components may adapt the system and/or its components so that the system operates according to a set of rules that fit with the setup of the individual system and the environment and conditions that the system is implemented in, as well as the user's needs and wishes. However, operation of building automation systems, where for example the user or manufacturer adapts the system to operate according to a set of rules, may suffer from disadvantages in that the building automation systems may be operated in ways which may be rather unreliable so that the system does not operate in line with the intentions of the user's or manufacturers intentions. Existing automation systems like e.g. window screening controls and electric lighting systems are thus far from being optimal. Their operation is often not appreciated by the users, therefore leading the users to disable them, resulting in lost opportunities of creating e.g. a comfortable and/or energy-efficient building automation.

It may thus e.g. be an object of the present invention to provide a solution improving the reliability and/or usability of building automation systems, e.g. so that the systems may operate more in line with the intentions of the user(s) and/or manufacturer. Document US2004/4260407 relates to a home automation control system for managing lighting, security system in residential building and using control panels that are capable of handling status messages relevant to controlled devices. Document WO2006/057675 relates to an automated risk management method for internal network of organization involving determining risk rating score for requested rule based on information entered in rule request graphical user interface.

### Brief description

The invention is disclosed by the appended claims.

By the above, several advantages are achieved. Generally, the above solves problems in relation to adequately determining if persons such occupants are out of a building and when they are home, and thereby an improved control of the building automation system may be obtained. Persons e.g. residing in building and/or e.g. working in buildings comprising building automation systems often carries personal mobile clients such as smartphones, PDA, a watch and/or the like with data communication means. These devices/clients follow the persons to an extent that justifies the assumption that if the client/device is present at a geographical location, there is a great chance that the person also is at the same location. Thus, by detecting which mobile clients are present by means of a transmitted client identifier transmitted from the respective client, it may be possible to obtain a more reliable control of the building automation system based thereon in relation to aspects where it is relevant to determine if person(s) are present or not.

By the invention, it may be possible to enhance building automation systems that are adapted to control devices dependent on whether users are home or away/out. Also, in aspects of the invention, a more individual control may be achieved dependent on which clients that are registered by the receiver.

Moreover, the present invention may provide a safe system in that the respective person's mobile client needs to be within range of the receiver so that the receiver can receive the transmitted client identifier.

Additionally, the combination of client identifier information data comprising information of registered (and thus approved) client identifiers of mobile clients, and client status information comprising information of approved/registered mobile client(s) which are registered as present, a dynamic solution of handing one as wells as a plurality of approved mobile client identifiers may be obtained. The system is moreover secure in that this information may be contained in the respective building automation system at the location of the building automation system.

It is understood that registered client identifiers may also be referred to as approved client identifiers in this document.

The registered clients of the client identifier information/ client identifier information data represents approved clients in the system, and this e.g. facilitates excluding operating the system according to received client identifiers that are not registered in the system, hence improving among others safety of the system.

The approved/registered client identifiers represent previously registered client identifier(s) that may previously have been added to the client identifier information data during e.g. a setup procedure. This e.g. provides a dynamic system that may easily be adapted over time.

In aspects of the invention, a set of rules may comprise one rule, but it may also in further aspects of the invention comprise a plurality of rules relating to e.g. time on the day, indoor and/or outdoor temperature, wind speed, information relating to if it rains, information relating to if the sun shines and/or the like.

The client identifier(s) may in aspects of the invention be encrypted and/or coded at the mobile client, and decrypted and/or decoded at the receiver to improve the safety of the system.

In aspects of the invention, said receiver may be arranged in or at the building comprising said building automation system.

This may e.g. provide an advantageous system with regard to e.g. safety issues in that the clients transmitting the client identification needs to be at, in or near the building comprising the system, to allow the receiver to process the transmitted client identification.

In preferred aspects of the invention, said system comprises one or more nodes such as one or more sensors and/or remote controls for transmitting control and/or parameter signals for use during control of said at least one controllable unit.

Hereby e.g. an enhanced building automation system with improved control possibilities may be provided.

Hereby e.g. an enhanced building automation system with improved control possibilities may be provided. The control signals from e.g. a sensor may be considered as parameter signals comprising measured values such as a parameter indicating a temperature, it may be a one bit binary signal indicating a true/false criteria (e.g. if it rains or not if the signal originates from a rain sensor), it may comprise a lux reading if the sensor is a sunlight sensor for detecting if the sun shines, it may comprise a wind speed reading from a wind speed sensor and/or the like. The control signals from e.g. a remote control may comprise instructions for the controllable unit to e.g. open or close a device such as a window, and/or adjusting e.g. a screening device such as an awning, shutter, blind or the like, it may initiate a predefined control scenario relating to control of a plurality of devices and/or the like.

In advantageous aspects of the invention, said receiver may be a stand-alone receiver arranged in/at the building comprising said building automation system.

Hereby the system may be compatible with a vast amount of standard mobile clients. And user occupation detection may in aspects of the invention be realized by merely adding a receiver to the building automation system.

This e.g. provides a flexible building automation system where e.g. an advantageous add-on to existing or new systems may be provided. Moreover, an advantageous scanning for and handing of the received client identifiers may be provided by this solution.

The stand-alone receiver may be a separate unit added to the building automation system. Stand-alone may be understood as separate from the network infrastructure such as access point router. Thus the receiver may be independent and provide a modular and easy way to upgrade and configure building automation system with user occupation detection capability.

In further aspects of the invention, said receiver may be implemented in a remote control of said system comprising said receiver. In other aspects of the invention, said receiver may be arranged together with at least one controllable unit of said system.

In advantageous aspects of the invention, the receiver may e.g. be connected to an external power supply and configured for continual scanning for client identifiers.

Scanning for client identifiers may consume relatively large amount of power, and thus, by connecting the receiver to an external power supply such as the utility grid provides sufficient power to avoid that the receiver often runs out of power. In aspects of the invention, the receiver may thus not be battery/accumulator powered during normal operation. However, it may in aspects comprise a backup battery for providing temporary power to the receiver.

The continual scanning may be provided with a predetermined interval, it may be provided according to when a computer code reaches the instructions to scan for client identifiers without having a specific timer function to determine when to scan and/or it may be initiated based on any other suitable criteria.

In aspects of the invention, said receiver may be configured for receiving control or parameter signals from one or more of said nodes, and said receiver may be configured for transmitting control signals to said one or more controllable units based on said signals from said nodes.

This may e.g. provide enhanced control because sensors and remotes may be low power devices which also in aspects of the invention may employ e.g. p2p communication. Thus receiver may in aspects of the invention help to share system parameters and/or away criteria among the nodes.

A component of said system at or in said building my in aspects of the invention comprise data storage for storing said client identifier information data and/or said client status information. This may e.g. provide a safe handling of client identifiers in the system.

In advantageous aspects of the invention, said receiver may wirelessly transmits control signals to one or more of said one or more controllable units based on at least received and processed client identifiers.

This provides an advantageous control of the devices controlled by the system. E.g. in that a local centrally controlled processing of client identifiers may be achieved. In aspects where the receiver is connected to an external power supply may this be advantageous in that power consuming parts of the control and processing of the system may be performed at the receiver, and then control signals may be transmitted to the relevant controllable units based thereon. Thus, if some controllable units and/or device controllers are accumulator/battery powered, this may enhance the battery time of these since some of the processing is performed external to these devices/units.

In further aspects of the invention, said receiver may be configured for receiving client identifiers transmitted directly from mobile clients.

This e.g. provides a system that may operate independently of data communication means of the building comprising said building automation system. Such data communication means may comprise wireless access points of the building for providing e.g. internet connection to the mobile clients. Hereby setup may also be enhanced. And the system has enhanced compatibility with many mobile clients.

In aspects of the invention, one or more further away criteria is/are to be fulfilled before switching from operating said one or more controllable units according to said first predefined set of rules to operate one or more of said one or more controllable units according to said second set of rules.

This may provide a more user friendly system in that multiple, relevant criteria may be used during the control. For example, to ensure that the system does not switch to operate according to the second set of rules merely because a user restarts her/his mobile client, deactivate data communication means to save power and/or the like, further criteria indicating that the person is away may be used. They may comprise that a user presses an "away" button, it may comprise input from movement sensors, it may comprise information of the time of the day, it may comprise date time and/or the like. Generally, any suitable away criteria and combinations thereof may be used in aspects of the invention.

Said further away criteria may in aspects of the invention comprise at least one timer function.

This may provide more reliable presence detection. For example if a user merely restarts her/his smartphone. The system may e.g. set up a timer when a client/client identification is detected as not present any more. For example, the timer may be set for each client identifier when the system detects that a client identifier that is registered as present is suddenly not present any more. Thus, the system will wait unit the timer expires before removing the client identification from the client status information.

Furthermore, in aspects of the invention, one or more further presence criteria may be used to trigger switching from operating said one or more controllable units according to said second set of rules to operate one or more of said one or more controllable units according to said first set of rules.

This may e.g. provide advantages relating to controlling the system based on different client identifiers so that different rules are used based on the detected client identifier. Thus, when a user enterer a building and is thus registered as present by pressing e.g. a "home" button, due to a movement sensor or the like, the system may use the client identification of the system to determine which first sets of rules to use.

Also, the further presence criteria may comprise that a user may press e.g. a button on a remote control or another button to switch from operating said one or more controllable units according to said second set of rules to operate one or more of said one or more controllable units according to said first set of rules. This may e.g. be relevant if a person does not own/have a mobile client comprising registered/approved client identifier, even though the person.

In aspects of the invention, said one or more further away criteria and said one or further presence criteria may thus be at least partly different.

Said client identifier information data may in advantageous aspects of the invention comprise information of a plurality of registered mobile clients. This may e.g. provide a system where a plurality of users may trigger control according to the different rule sets based on client identifiers. The plurality of registered mobile clients are preferably represented by the client identifier of the respective mobile client

In advantageous aspects of the invention, different predefined sets of rules may be used for operating one or more controllable units dependent on which registered mobile client(s) that is/are determined as present.

This may e.g. provide a system where the system may perform an individual control of units of the system dependent on different registered clients and thus users. For example, if a child living in the building arrives at the building, the system may operate units assigned to his/her room, a bathroom, a living room kitchen and maybe other rooms. But if a parent gets home, the living room, kitchen, and bathroom may be controlled according to first sets of rules while controllable units assigned to the child's room may not be operated before the client identifier of the child's mobile unit is registered.

The client status information may in aspects comprise information regarding which registered client identifier that is registered as present. Thus, the client status information may e.g. comprise a client identifier so that the system may keep track on which clients that seem to be present. The system may thus e.g. based hereon be configured for operating one or more controllable units dependent on which registered mobile client(s) that is/are determined as present according to the client status information.

In advantageous aspects of the invention, different sets of rules may be used for controlling different controllable units of said building automation system.

In aspects of the invention, said first predefined set of rules result in a control mode having a safety level that is lower than a safety level obtained by the control mode provided by said predefined second set of rules.

Generally, automatic control and operation of devices of a building may be advantageous. However, when no users are home/present in/at the building, it may be important that the system does not perform actions that will make it easier for unauthorized persons such as burglars to commit burglary in the building comprising the system. The control modes may in aspects comprise a comfort operation mode and a climate operation mode respectively.

Thus, the first set of rules may not allow any windows or certain ventilation shafts to open, it may only allow some windows and/or ventilation shafts to open, and/or it may only allow windows and/or ventilation shafts to open to a certain predefined extent considered safe, for example e.g. 30 mm, 50 mm, 100 mm and/or the like. This may allow ventilation in the housing but still make it hard for burglars to enter through the window or ventilation.

However, when the first set of rules are used, these may allow a much larger opening of e.g. windows and/or ventilation shafts in that an authorized/registered mobile client and thus user is/are registered as present.

In aspects of the present invention, said first predefined set of rules comprises instructions to open one or more windows to a larger extent than what is allowed according to said second predefined set of rules.

In aspects of the invention, said first set of rules implies a comfort operation mode, and wherein said second set of rules implies a climate operation mode.

The comfort operation mode may be adapted to provide a comfortable climate inside the whole building, or at least in certain rooms of the building dependent on which client that is registered as present.

The climate operation mode may on the other hand be configured to store e.g. thermal energy in the building. For example, in geographical areas where temperature exterior to the building is higher than the temperature inside the building, the system may be adapted to screen the windows of the building by devices such as blinds, shutters, awnings and/or the like to keep a lower temperature inside the building when no persons are registered as present. However, when persons are registered as present, daylight may be needed, and at least some of the screen(s) may according to the first set of rules be opened to provide daylight into one or more rooms of the building.

In aspects of the invention, said associated device may be a screening device such as an awning, a film coating, a blind or a shutter, and wherein at least one of said one or more controllable unit(s) said associated device into a plurality of different predefined positions so as to adjust the amount of light that is allowed to enter.

This may e.g. comprise that apertures such as windows may be screened by means of said screening device(s) so that the climate in the building may be at least partly adjusted by the system by adjusting the amount of sunlight that is allowed to enter through the window. It may also in aspects comprise adjusting one or more ventilation opening and/or the like.

In aspects of the invention, said at least one device may be a motor and/or actuator driven and battery powered.

This e.g. provides a dynamic system that is easy to install in that external power supply is not needed. This however sets some demands relating to power consumption of the system.

In advantageous aspects of the invention, one or more of said one or more mobile clients (4, 5) is/are a personal mobile electronic device such as a cellphone, e.g. a smartphone, a tablet, and/or a Personal Digital Assistant (PDA).

These personal mobile electronic devices often provide a reliable indication regarding if a person is home or not.

In aspects of the invention, said one or more mobile clients are configured for transmitting said client identifiers autonomically.

Thus, the client transmits the client identifiers independently of user interactions with the device, for example while the mobile client is located in a pocket, a purse, while it is left on a support such as a table or shelf and/or the like. This may be achieved by a computer program product installed at the device, it may be achieved due to inherent properties of data communication means of the mobile client (as an example a WLAN probe request) and/or the like.

In aspects of the invention, said one or more mobile clients may be configured for transmitting said client identifier(s) upon receipt of a client identifier request transmitted from said system.

Said client identifier may in advantageous aspects of the invention be based on a unique identifier of said one or more mobile clients, such as an unique identifier of a network interface of said one or more mobile clients.

This unique client identifier may be a client identifier assigned to the mobile client by the system. Alternatively, in advantageous aspects of the invention, it may e.g. be an identifier assigned to /implemented in the specific device during e.g. production of the device. For example it may comprise a serial number of the device, it may comprise a MAC address and/or the like, and/or combinations of different unique identifiers. For example, in aspects of the invention, a client identifier assigned to the mobile client by the system may be combined with e.g. a MAC address.

In advantageous aspects of the invention, said client identifier may be based on a Media Access Control (MAC) address of one or more mobile clients.

MAC addresses related to WIFI communication means of respective mobile clients may be considered as advantageous client identifiers to use for client identifiers for the system. The MAC addresses may to a large extent be easy derivable from the mobile device/client itself, and/or from data frames transmitted from the mobile client during WIFI related communication with e.g. wireless access points.

Thus, the MAC address may in aspects of the invention be used for establishing a unique identifier, e.g. by using the MAC address for encryption, or the MAC address may be used directly.

Thus, the approved/registered client identifiers of the client identifier information data may in embodiments comprise MAC addresses of mobile clients.

In aspects of the invention, said client identifier may comprise a Media Access Control address of one or more mobile clients.

In further aspects of the invention, said client identifier may comprise a serial number of said mobile client. The MAC address may in aspects of the invention be encrypted during transmission, by may be decrypted at the receiver so that the MAC address may be identified. The same may apply with a serial number or another unique identifier of the client.

In aspects of the invention, said receiver may receive probe requests transmitted from mobile clients, and wherein said probe requests may be processed so as to identify the client identifier of the mobile client from which the probe request originates.

The probe requests may e.g. be WLAN related comprising a MAC address of the mobile client transmitting the MAC address. Thus, the receiver may passively "sniff" the probe requests and extract the MAC address which is then used as a client identifier. However, other relevant data transmitted between e.g. a wireless access point of the building and mobile clients may also be used by the receiver, e.g. probe responses and/or other data frames. Hereby the system is compatible with a vast amount of standard mobile clients and even works in passive mode, where the mobile client does not need to connect with the WLAN. The receiver may hereby passively detect the probe requests and the presence of a mobile client. And user occupation detection may in aspects of the invention be realized by merely adding a receiver to the building automation system.

In aspects of the invention, said client identifiers are transmitted by means of Wireless Local Area Network means of said at least one mobile client and wherein said receiver is configured for scanning for client identifiers by means of Wireless Local Area Network (WLAN) means of said receiver.

In other aspects, other wireless communication standards such as e.g. Bluetooth, zigbee and/or the like may be used for transmitting the client identifier, and thus, the receiver(s) may comprise corresponding receiving means for receiving and processing the data transmitted from the mobile client(s).

Said receiver(s) may in aspects of the invention retrieve a list of mobile clients (from e.g. a router or another wireless access point) registered in a local data network of the building comprising said system.

This may enhance safety in that the mobile clients may have to be "logged on" to a wireless access point which may e.g. comprise a list of registered mobile clients. Thus, the list may in aspects be correlated with the client identifier information to see if registered/approved clients are using the local area network.

Said system may in aspects of the invention comprise two or more of said receivers, and client identifier(s) received from mobile clients may be processed based on common client identifier information data.

Thus, e.g. larger buildings may comprise a number of strategically placed receivers in the building. This may e.g. facilitate that persons are not bound to use a specific entrance to the building so that the client identifiers transmitted.

In aspects of the invention, said system comprises at least one remote control, and wherein a user may control said remote control so as to operate one or more of said one or more controllable units so as to overrule at least a part of the rule(s) of said first set of rules.

In aspects of the invention, a timer function may be associated with clients registered as present according to said client status information, and said client status information may be updated when said timer function lapse.

The update may e.g. comprise that a client identifier of the client status information which is related to the timer is erased/removed from the client status information when the timer lapse. This may provide an advantageous way of handing the client status information to e.g. avoid that a mobile client is registered as not present merely because the user e.g. restart the mobile client or is temporarily away.

The timer(s) may e.g. in embodiments of the invention be preset to a time such as at least one minute such as at least 2 minutes, e.g. at least 5 minutes, e.g. at least 10 minutes, such as at least 15 minutes.

The invention moreover relates to a building automation system for controlling at least one device such as a window, blind, shutter, awning, door, ventilation shaft and/or light source, wherein said building automation system comprises one or more controllable units for being associated with said at least one device,
wherein said system furthermore comprises a receiver, which receiver is configured for receiving client identifier(s) transmitted wirelessly from one or more mobile clients,
wherein received client identifiers are configured to be processed based on client identifier information data comprising information of one or more registered client identifiers of mobile clients,
wherein said system comprises client status information of registered mobile client registered as present, and wherein said client status information is configured to be updated according to said processing of received client identifiers ,
wherein at least one of said one or more controllable units is configured to be controlled according to a first predefined set of rules if at least one registered mobile client is registered as present according to said client status information, and
wherein said at least one controllable unit is configured to be controlled according to a second predefined set of rules if no registered mobile clients are registered as present according to said client status information.

In aspects of the building automation system, said receiver may comprise data storage for storing said client identifier information data and/or said client status information, and wherein said receiver is configured for performing said processing of received client identifiers.

In aspects of the building automation system, said system may comprise one or more nodes such as one or more sensors and/or remote controls for transmitting control signals for use during control of said controllable unit(s).

In advantageous aspects of the building automation system, said receiver may be a stand alone receiver external to said controllable unit(s) and/or said nodes.

In advantageous aspects of the building automation system, said receiver, such as said stand alone receiver may be powered by an external power supply.

In advantageous aspects of the building automation system, said receiver may be configured for wirelessly transmitting control signals to one or more of said one or more controllable units based on at least received and processed client identifiers.

In aspects of the building automation system, said at least one device may be motor and/or actuator driven by accumulated power.

In advantageous aspects of the building automation system, said system may be operated according to a method of any of claims 1-29.

The invention additionally relates to a receiver for a building automation system, said receiver being configured for receiving and processing client identifiers transmitted from mobile clients,
wherein said receiver is configured for processing said client said received client identifiers based on client identifier information data, said client identifier information data comprising information of one or more registered client identifiers of mobile clients,
wherein said receiver is configured for updating client status information based on said processing, which client status information comprises information of registered mobile client(s) registered as present.

In aspects the receiver, one or more controllable units of said system (1) is/are configured to be controlled by said receiver according to a first predefined set of rules if at least one registered mobile client is registered as present according to said client status information, and
wherein said at least one controllable unit is controlled by said receiver according to a second predefined set of rules if no registered mobile clients is/are registered as present according to said client status information.

The receiver may thus in aspects of the invention comprise the predefined rules and transmit signals accordingly. In other embodiments, the rule sets may be stored and processed at other locations in the system such as in a remote control, a controllable unit, a further controller and/or the like. In e.g. such aspects, the receiver may provide information regarding detected client identifiers and this information may be used in relation to the rule sets.

In aspects of the invention relating to the receiver, said receiver is a stand alone receiver.

This may e.g. provide advantageous retrofitting in relation to existing, running systems, and/or may provide advantages in relation to providing a more dynamic system that may be adjusted to different needs/wishes.

In aspects of the invention relating to the receiver, said stand alone receiver is configured to be powered by an external power supply.

In aspects of the invention relating to the receiver, said stand alone receiver is configured to operate according to the method of any of claims 1-29, and/or wherein said receiver is configured to be a part of a building automation system (1) according to any of claims 30-37.

Additionally, the invention relates to a software program product which, when implemented and running on a mobile client is configured for transmitting a unique client identifier from the respective mobile client to a receiver of a building automation system.

In aspects of said software program product, the software program product, when implemented and running at said mobile client is configured for transmitting said client identifier autonomically.

In aspects of said software program product, said software program product, when implemented and running, is configured for transmitting said client identifier upon a request from a receiver of a building automation system.

In aspects of said software program product, the software program product is configured for transmitting secured or encrypted client identifiers.

The secured identifiers may e.g. comprise coded identifiers which are coded at the client and which are configured to be decoded at the receiver.

In aspects of said software program product, the software program product, when implemented and running, is configured for transmitting said client identifier to a system according to any of claims 30-37 and/or in accordance with a method according to any of claims 1-29.

The invention may moreover in a further aspects of the invention relate to use of probe requests transmitted from mobile clients as basis for operating one or more devices of a building automation system, e.g. according to different predetermined rules. This aspect may in further aspects be combined with one or more aspects disclosed e.g. in relation to one or more of claims 1-47.

It is generally understood that advantages explained in relation to the above e.g. disclosed method may also apply to the different aspects of the building automation system, the receiver and the software program product disclosed above. Thus, the aspects relating the method, the system, the receiver and the software program product may be combined in a plurality of ways within the scope of the invention.

### Figures

The invention will be explained in further details below with reference to among others the figures of which:
- figs. 1-3: : illustrates embodiments of a system according to embodiments of the invention,
- fig. 4: : illustrates embodiments of a receiver according to embodiments of the invention,
- fig. 5: : illustrates embodiments of processing of data from mobile clients according to embodiments of the invention,
- fig. 6: : illustrates embodiments of handing client identifiers,
- figs. 7-10: : illustrates embodiments of utilizing different sets of rules based on client identifiers according to embodiments of the invention,
- figs. 11a-11b: : illustrates embodiments where different operation modes are provided by different sets of rules according to embodiments of the invention,
- fig. 12: illustrates embodiments of a building automation system comprising a plurality of controllable units, nodes and devices to be controlled.
- fig. 13: : illustrates an embodiment of client identifier data transmitted from a mobile client.
- Fig. 14: illustrates an embodiment of client identifier information comprising a plurality of client identifiers,
- Figs. 15-15a: : illustrates embodiments of client status information and different sets of rules used, according to embodiments of the invention,
- Fig. 16: illustrates a further embodiment of a system according to embodiments of the invention,
- Fig. 17: : illustrates an embodiment of a system comprising a plurality of receivers according to embodiments of the invention,
- Fig. 18: : illustrates an embodiment of a setup scenario for registering client identifiers according to embodiments of the invention, and
- Fig. 19: : illustrates embodiments of the invention wherein a software program product is installed on a mobile client according to embodiments of the invention.

### Detailed description of the invention

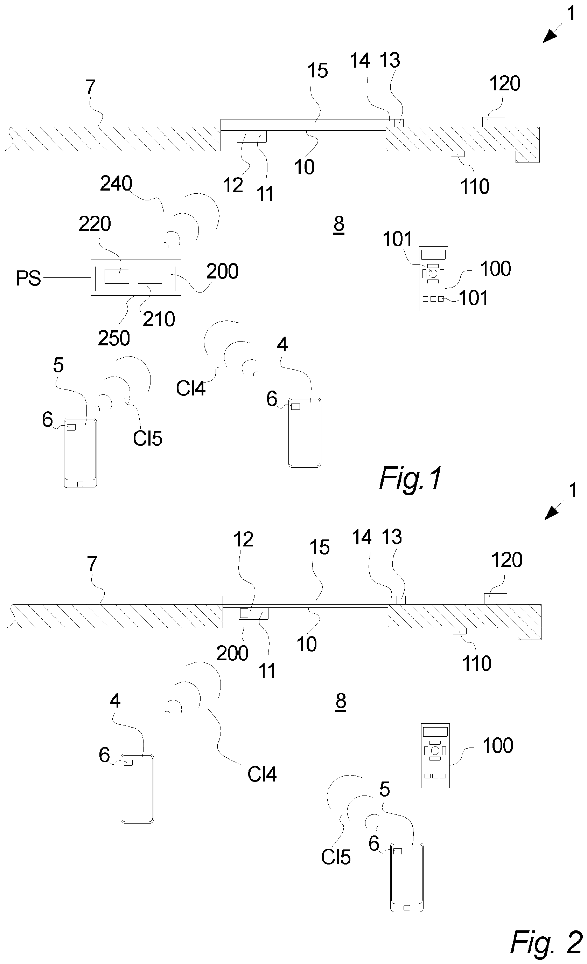

Fig. 1 illustrates a building automation system 1 according to embodiments of the invention. The building automation system 1 is installed in a building 7 comprising one or more rooms 8 and comprises controllable units 12, 13 associated with devices 10, 15 to be operated.

In the present example, the device 10 is a window and the device 15 is an awning. The controllable unit 12 is associated with the window 10, and is arranged to control a device controller 11 such as a drive arrangement, e.g. an actuator and/or an electric motor. The device controller 11 is arranged to open and close the window 10 according to commands/input from the controllable unit 12.

In a similar way, the controllable unit 13 is associated with the awning 15, and is arranged to control a device controller 14, in this case a drive arrangement 14 such as an electric motor which is arranged expand and retract (e.g. by winding/unwinding) the awning according to commands from the controllable unit 13. The device controller may also in embodiments comprise an electric actuator dependent on the type of device to be controlled.

The system 1 moreover comprises nodes. The system comprises a node 100 in the form of a remote control to be controlled by a user. The remote control 100 is configured to transmit control signals comprising commands to the controllable units 12, 13 so that the user may e.g. open and close the window 10, and operate the awning 15 by means of the remote control. The remote control comprises 100 buttons 101 to be activated by users, e.g. physical buttons 101 or it may be buttons visualized on a touch screen of the remote control 100.

The system 1 may moreover in embodiments of the invention comprise further nodes such as for example one or more temperature sensors 110, and/or one or more wind sensors 120. The temperature sensor(s) may comprise one or more indoor temperature sensors to detect the temperature of rooms in the building, and/or it may comprise outdoor temperature sensors to detect the temperature outside the building.

Also, the system 1 may in embodiments comprise one or more nodes in the form of movement sensors (not illustrated) for detecting if persons are present in the building, e.g. so as to automatically control the light in a room based on signals from the movement sensor. Additionally, the system may comprise one or more nodes (not illustrated) in the form of rain sensor(s) for detecting if it rains and transmitting control signals accordingly, e.g. to the controllable unit 12, it may comprise sun sensors to detect whether the sun shines and/or the like.

The wind sensor 110 may e.g. be arranged in the system and it's output may e.g. be used so as to assure that the awning 15 is not unwinded too much if a high wind speed is detected, to assure if a window is not opened to much if a high wind speed is detected and/or the like.

The temperature sensor 120 may transmit temperature data to the controllable unit 12 (and/or another of further units/nodes of the system). The controllable unit 12 may then process the input from the temperature sensor according to a set of rules and operate the window accordingly. For example, the controllable unit 12 may be configured to open the window a predefined amount, e.g. 20% of the possible opening range provided by the device controller 11, if the temperature in the room 8 is above a predefined temperature value such as e.g. 23°C. Likewise the controllable unit 12 may be configured to close the window if the temperature in the room 8 is below a predefined temperature such as e.g. 20°C.

Additionally, the system 1 may in embodiments of the invention be configured to detect if it rains (e.g. by means of a node in the form of a rain sensor), and a controllable unit 12 may hence be controlled to close the window if input from a rain sensor indicates that it rains.

The signals from the sensor(s) may thus in embodiments of the invention comprise parameter(s) indicating a reading/measurement of the respective sensor. The signals from the sensor(s) may be transmitted to controllable unit(s) of the system and/or to other device(s) (such as a receiver 200) which may then either process the signal(s) to provide control signals 240 to controllable units, and/or it may comprise that the other device, such as the receiver, forward the content of the signal from the sensor, such as a value representing a reading/measurement to a controllable unit.

The system 1 moreover comprises a receiver 200. The receiver 200 is configured for receiving transmitted client identifiers CI4, CI5 which are transmitted from a mobile client 4, 5 by means of wireless data communication means 6. For this purpose, the receiver 200 comprises a receiver circuit 210 which is configured for receiving the client identifiers CI4, CI5 by using a wireless data communication technology used by the device(s) 4, 5 for transmitting the client identifier CI4, CI5.

Generally, the mobile clients 4, 5 may also be referred to as mobile devices.

In preferred embodiments of the invention, the mobile clients 4, 5 are personal mobile electronic device such as a cellphone, e.g. a smartphone, a tablet, a Personal Digital Assistant (PDA), handheld terminal and/or the like. These personal mobile devices 4, 5 are normally turned on when the person is moving around. It may also in embodiments comprise laptops and/or further mobile clients.

The mobile client(s) 4, 5 may comprise a screen, such as a touch screen for allowing the user to interact with the client 4, 5 so as to e.g. perform and receive telephone calls, play games on the client, access social media, browse the internet and/or the like.

In embodiments of the invention, the client identifier CI4, CI5 is a unique identifier assigned to the respective mobile client 4, 5 so as to enable identification of the individual mobile client 4, 5 based on the client identifier. For example, the client identifier CI4 is preferably unique to a first mobile client 4, and the client identifier CI5 is unique to a first mobile client 5. Examples of this are explained in more details later on. The unique client identifier(s) CI4, CI5 may in the following be referred to just as client identifier CI even though it is understood that a plurality of mobile clients may comprise each their unique client identifier.

In advantageous embodiments of the invention, the used data communication technology for transmitting the client identifier CI is a wireless local area network (WLAN) technology. The mobile device thus transmits its respective client identifier CI4, CI5 by using WLAN communication means 6 of the mobile client 4.

In other embodiments, other wireless data communication technology may be used for transmitting the client identifier CI4, CI5. For example a relatively short range wireless communication standard using 2400-2483.5 MHz (including guard bands) for communication, also known as Bluetooth. Another example may be using a Zigbee standard. This may e.g. operate in the radio bands 868 MHz, 915 MHz and/or 2.4 GHz. It is naturally to be understood that the receiver 200 in such embodiments comprises data communication means for receiving the client identifiers CI.

The receiver 200 comprises processing means 220 for processing the client identifiers CI received by the receiver circuit 210.

The receiver 200 is configured for controlling, or at least provide basis for controlling, controllable units 12, 13 of the system by transmitting a control signal 240 to one or more controllable units so that the client identifier can be taken into consideration during the control of the system 1. E.g. based on client identifiers CI and in further embodiments of the invention, also by processing signals from the nodes 100, 110, 120.

In embodiments of the invention, the receiver 200 may be implemented in a device comprising a casing 250 external to the controllable unit(s) 12, 13 of the system 1 and the remote control 100 or other nodes so that the receiver 200 may be considered as a stand-alone device. The receiver 200 and the casing 250 may in embodiments of the invention form a docking station or the like for providing a storage base and preferably also recharging unit for the remote control(s) 100 of the system.

The receiver 200 configured as a stand-alone device may in embodiments be connected to an external power supply PS such as to be powered from the utility grid/mains so as to provide sufficient power to charge the remote control 100 and to continuously scan for client identifiers. This power supply PS may hence also be used for supplying electric power to the receiver 200. The receiver 200 may in further embodiments be a stand-alone device not acting as a docking station. The receiver 200 may thus be considered as a possible add-on opportunity to the system, e.g. to provide retrofitting of existing systems or to provide a more adaptable system.

One or more of the controllable devices 12, 13 and/or the device controllers 11, 14 of the system 1 may be supplied by external electric power PS from the utility grid and/or they may comprise a battery/accumulator for supplying electric energy to the devices 12, 13 and/or device controllers 11, 14. For example, a controllable unit and device controller may be battery powered to e.g. open or close a window (such as a roof window or another window arranged out of range of users) or operate a screen such as an awning, . Thus, when receiving control signals 240 from the receiver 200 and/or a remote control, the opening or closing of the window, closing or opening a screen is achieved by using stored power of a battery/accumulator. The battery may e.g. be implemented in the controllable unit, in the associated device to be controlled and/or the like.

The receiver 200 may in embodiments of the invention be configured for receiving control signals from the nodes 100, 110, 120, and the receiver 200 may thus be configured for transmitting control signals 240 to the one or more controllable units 12, 13 based on the signals from the node(s). The stand-alone component comprising the receiver may thus in embodiments if the invention be considered as a kind of central controller of the system 1.

In embodiments of the invention as indicated in fig. 2, the receiver 200 may be incorporated in a controllable unit 13, 14 of the system. It is naturally understood that the receiver 200 also in this embodiment may comprise a receiver circuit 210 and/or processing means 220 as explained above and below. This receiver circuit 210 may in embodiments of the invention be shared with communication means of the controllable unit for receiving data from nodes 100, 110, 120 of the system.

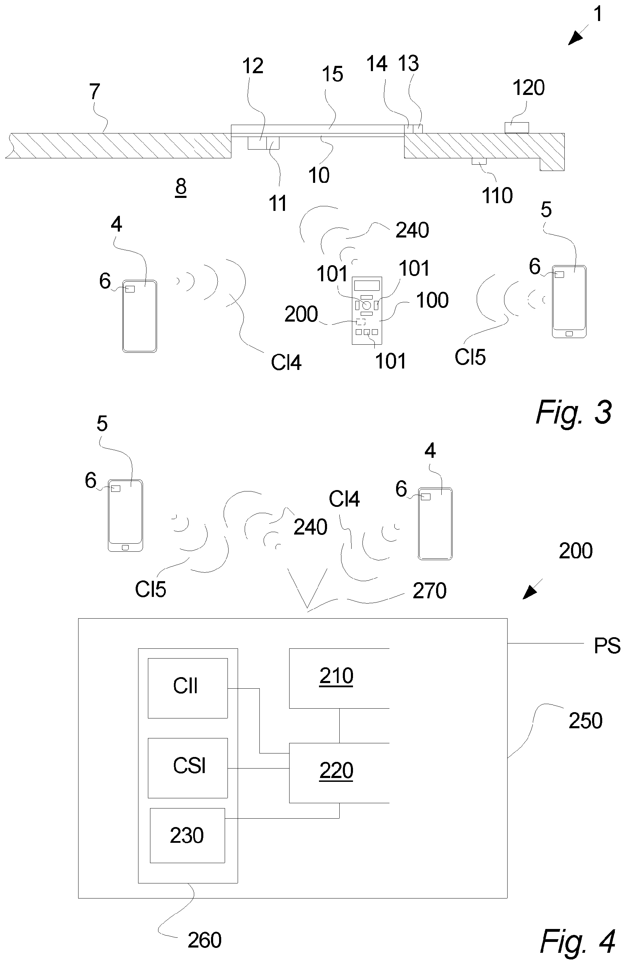

In embodiments of the invention as illustrated in fig. 3, the receiver 200 may be incorporated in a remote control 100 of the system 1. It is naturally understood that the receiver 200 in this embodiment may comprise a receiver circuit 210 and/or processing means 220 as explained above and below. This receiver circuit 210 may in embodiments of the invention be shared with communication means of the remote control for receiving data from nodes 100, 110, 120 of the system. The control signal 240 to one or more controllable units 12, 13 may in embodiments of the invention thus be transmitted from the remote control 100, e.g. by means of transmittance means configured for transmitting control signals triggered by e.g. user interactions with the remote control, such as when the user presses one or more buttons 101 of the remote control.

In embodiments of the invention, the remote control 100 may be configured for receiving signals from other nodes of the system 1 and transmit control signals 240 to the controllable unit(s) of the system according to a processing of the input from the nodes.

Fig. 4 illustrates an embodiment of a receiver 200 according to embodiments of the invention. The receiver 200 may e.g. be a "stand alone" device as described in relation to fig. 1, it may be a part of or be arranged together with a controllable unit as illustrated in fig. 2, and/or it may be arranged in a remote control as illustrated in fig. 3.

The receiver 200 comprises processing means 220 for processing the client identifiers CI received by the receiver circuit 210. The processing means 220 may comprise any suitable Central Processing Unit CPU configured for operating according to instructions 230 stored e.g. at the receiver 200.

The receiver 200 moreover comprises a data storage 260 for e.g. saving the instructions 230 and other relevant data. The data storage may comprise a SSD (Solid State Drive) data storage, it may comprise a RAM (Random Access Memory) data storage or any other suitable data storage.

Additionally, the receiver 200 comprises receiving means 270 in the form of an antenna configured for receiving data including the client identifier(s) CI from the client(s) 4, 5.

Moreover, the data storage 260 comprises client identifier information data CII. This client identifier information data CII comprises information of one or more approved client identifiers CI of mobile clients 4. This/these client identifiers CI have been registered in the client identifier information CI during e.g. a setup procedure. The client identifier information data CII may comprise various identifiers of different mobile clients 4, 5. For example, in embodiments of the invention where the client identifier CI4, CI5 may comprise a MAC address of the client(s) 4, 5, the client identifier information data CII may comprise information of the MAC address of the clients 4, 5.

In embodiments of the invention where the client identifier(s) 4, 5 comprises a serial number of the client(s) 4, 5 the client identifier information data CII may comprise information of Serial number of the client(s) 4, 5 and so on.

Generally it is understood that the system 1 may be configured for receiving client identifiers from at least one, such as at least two, e.g. at least three, such as at least five, e.g. at least ten, for example twenty or even more different approved mobile clients. The client identifier information data CII may thus comprise information (preferably at least comprising the client identifier) of each of these clients 4, 5 to enable identification of the respective mobile client 4, 5.

It is generally understood that in embodiments of the invention, the client identifier CI4, CI5 may be any suitable type if identifier for uniquely identifying the mobile client 4. The client identifier CI may in embodiments of the invention be unique identifier which is calculated by means of a predefined algorithm in the mobile client for establishing an encrypted client identifier, and the receiver 200 (or other parts of the building automation system) may in such embodiments comprise means for decrypting the client identifier CI or compare a code so as to identify the client identifier CI. The encryption may e.g. comprise retrieving and amending the MAC address or another unique ID of the mobile device/client 4, 5 according to an encryption or code or hash program stored at the mobile client 4, 5. The result of the encryption may then be a client identifier CI which is transmitted to the receiver 200. The receiver 200 processes the received encrypted client identifier CI to decide whether the transmitted client identifier is approved/registered in the system. This may e.g. be done by processing the received encrypted client identifier directly and correlate it with information of the client identifier information data CII. Alternatively, the client identifier CI may be decrypted by the receiver 200 according to instructions 230 to extract the MAC address, serial number or another unique identifier of the mobile client 4 from the received client identifier CI and it may then be correlated with information of the client identifier information data CII which in aspects may comprise e.g. the MAC address serial number or another unique identifier of approved mobile clients 4.

The receiver 200 moreover comprises client status information CSI. The client status information CSI may be a list containing information of mobile clients registered as present in the building 7 comprising the building automation system 1, and is based on a processing of the received identifiers CI. Alternatively, it may be a "flag" or a parameter merely indicating whether at least one approved/registered client 4, 5 is registered as present according to the processing performed by the processor 220.

In embodiments of the invention, the receiver 200 may be configured for receiving and processing probe requests transmitted from mobile clients 4, 5 within range of the receiver 200. A probe request is a type of WLAN frame transmitted from clients such as mobile clients 4, 5 and are normally transmitted several times each minute when the WLAN is enabled at the mobile device/client 4, 5. The probe requests are normally used by the mobile clients for detecting the presence of wireless access points such as wireless routers, which normally respond with a probe response frame. Probe requests are normally transmitted at different channels over time. These channels may e.g. be located in a 2.4 GHz or 5 GHz band and may be is divided into a number of channels such as e.g. 14 channels spaced for example 5 MHz apart.

The probe requests comprises source information including the MAC address information of the mobile client transmitting the probe request. The probe request may additionally comprise other information such as SSID (Service set identifier) information.

In embodiments of the invention, the receiver 200 receives and processes probe requests transmitted from mobile clients 4, extracts the MAC address of the probe requests, and uses this extracted MAC address as the unique client identifier CI for identifying the mobile client 4, 5. The receiver 200 may in embodiments of the invention be configured for scanning different WLAN channels for probe requests comprising approved/registered client identifiers CI, it may be configured for scanning only one predefined, specific channel WLAN and/or the like.

The receiver 200 is in this embodiment a part of a "stand alone" device having it's own casing 250 (so as to e.g. be a docking station for charging a remote control and/or the like) as explained above in relation to fig. 1 but it may also, in other embodiments, be implemented in other parts of the system 1, e.g. as explained in relation to figs. 1 and 2. The "stand alone" device comprising the receiver 200 may in further embodiments be configured for managing other tasks of the system such as controlling controllable units of the system based on input from sensors, remote control(s) sets of rules RS1, RS2 and/or the like.

If for example, client identifiers is/are to be extracted from a prove request, receiver 200 may comprise Wireless Local Area Network (WLAN) means that are capable for receiving and processing data frames of Wireless Local Area Network protocol.

Generally, in embodiments of the invention, the client identifiers CI4, CI5 may be configured to be transmitted by means of an IEEE 802.11 protocol family such as the 802.11a, the 802.11g, the 802.11b, the 802.11ah, the 802.11ad and/or the 802.11ac protocol.

In embodiments of the invention, the receiver 200 may be adapted to receive signals from nodes 100, 110, 120 of the system, process these input and transmit control signals 240 accordingly to the controllable unit(s) of the system 1.

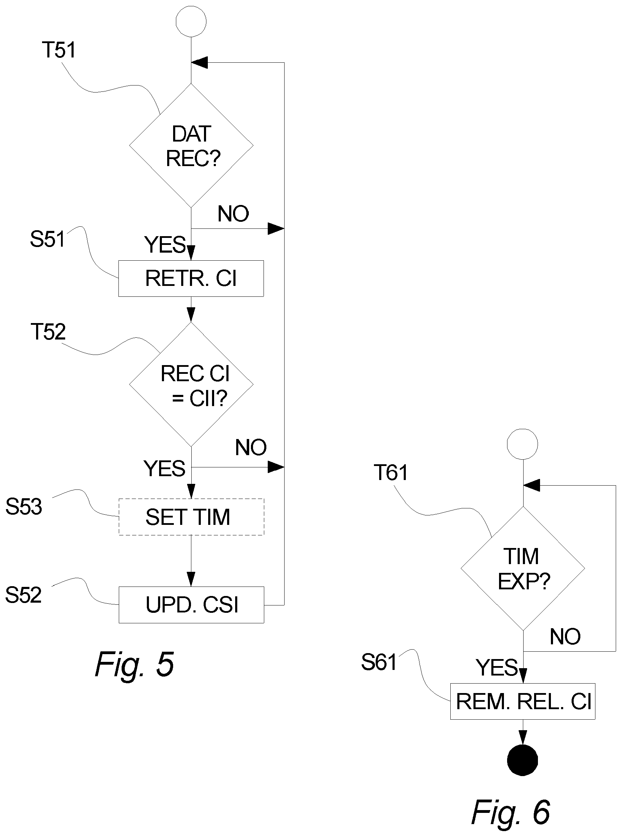

Fig. 5 illustrates a flowchart according to embodiments of the invention. The flowchart illustrates an example of managing the client status information CSI of the system. This may according to embodiments be performed by the receiver(s) 200, a node of the system, a controllable unit of the system and/or the like. In this embodiment however, it is performed by means of the receiver 200.

In test T51 (DAT REC?), the receiver 200 tests whether data have been received from a client. The received data may comprise a probe request from a client 4, 5, or any other suitable generated data package comprising a client identifier CI.

If no client identifier CI is received, the receiver 200 continues to scan for data comprising client identifiers CI.

If data is received, the receiver 200 processes the received data in step S51 (RETR. CI) so as to retrieve a client identifier CI from the received data.

When the client identifier CI has been retrieved from the data, the receiver 200 in test T52 (REC CI = CII) correlates the retrieved client identifier CI with client identifier information data CII comprising the information of approved client identifier(s) CI of mobile clients 4, 5.

If the received client identifier CI is present in the client identifier information data CII, the retrieved client identifier CI is an approved/registered client identifier. Thus, the client status information CSI is updated in step S52, e.g. so that the system 1 comprises the information that an approved client, and thus an approved user, is present in or near the building comprising the building automation system 1. Thereafter, the receiver returns to scanning for client identifiers in test T51.

If the received client identifier CI is however not present in the client identifier information data CII, the client status information CSI is not updated, and the receiver returns to scanning for client identifiers in test T51.

Step 53 is considered as an optional step according to embodiments of the invention. In step 53, a timer is set or reset to a predefined time when a registered client identifier client is detected as present. The timer may in embodiments of the invention be associated with a specific, received client identifier CI so that, when the timer expires, the related client identifier CI is removed from the client status information CSI.

In embodiments of the invention, (not illustrated), the update of step S52 may comprise that an existing, running timer may be reset if a client identifier corresponding to the client identifier CI associated with the respective timer is received before the respective timer expires. Alternatively, an additional timer may be set and related to the respective client identifier CI.

Fig. 6 illustrates a flow chart according to embodiments of the invention. The flow chart relates to an example of how to manage the client status information CSI based on timers. The system 1 in Test T61 (TIM EXP?) tests whether a timer relating to a client identifier CI of the client status information CSI is expired. If the timer is expired, the client identifier CI related to the expired timer is removed from the client status information CSI in step S61. It is understood that other or additional criteria beyond a timer function may also be used in embodiments of the invention for determining when to remove a client identifier for the client status information CSI.

Thus, if e.g. three clients are detected as present, three timers are set to a predetermined time, and each timer is associated with a client identifier of the client status information CSI. Then, when a timer expires, e.g. because it is not updated/reset due to that a person has left the building and as brought his/her mobile client so that the client is not detected by the receiver, the related client identifier is removed from the client status information.

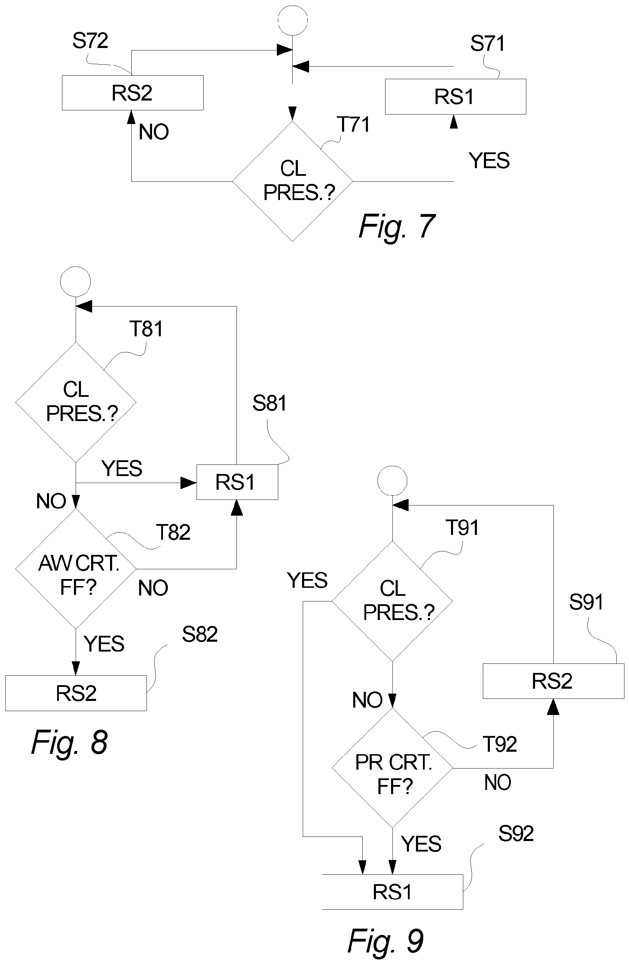

Fig. 7 illustrates a flow chart according to embodiments of the invention. The flow chart relates to embodiments of controlling the control controllable units 12, 13, 22, 23, 22, 23, of the system 1 and thus devices, based on client identifiers CI.

In Test T71 the system monitors the client status information CSI of the system so as to determine whether a mobile client 4, 5 is registered as present in the system due to a received, approved client identifier CI. This may be achieved by determining if at least one client identifier is registered in the client status information CSI.

In embodiments, the client status information CSI may be represented by a simple flag or other "binary" variable which is toggled/shifted based on whether at least one approved client identifier is registered, this flag may be monitored.

As long as at least one approved mobile client 4, 5 is registered as present according to the client status information CSI, the system 1 operates the controllable units according to a first predefined set of rules RS1 as illustrated in step S71.

During this, users may moreover use a remote control 100 to override or adapt parts of the rules RS1 by means of e.g. a remote control so as to open or close a window at least partly or fully, it may comprise operating blinds, shutters, awnings or the like, it may comprise that the user enter a wished target room temperature that the system should operate the controllable units so as to reach the target temperatures and/or the like.

However, if no approved mobile client 4, 5 is registered as present according to the client status information CSI, the system 1 operates the controllable units according to a second set of rules RS2 as illustrated in step S72.

These rules may e.g. be set to optimize the climate in the building to e.g. prevent sunlight from entering rooms of the building by operating screen devices such as awnings, blinds, shutters or the like.

Fig. 8 illustrates an embodiment of switching from operating according to the first set of rules RS1 to operating according to the second set of rules RS2, and where further "Away criteria" AW CRT are to be complied with before switching to operating according to the second rule set RS2. As in fig. 7, as long as at least one mobile client is registered (test T81) as present according to the client status information CSI, the system 1 operates according to the first rule set RS1. However, if no approved mobile client 4, 5 is registered as present according to the client status information CSI, the system 1 tests (test T82) if the further "Away criteria" AW CRT are complied with before switching to operate according to the second set of rules RS2.

The further criteria of test T82 may help to increase the probability of that no users are present in or near the building comprising the system 1 before operating according to the second rule set RS2. The further criteria of test T82 may comprise detecting whether a user has pressed a predefined "away" button of the system before leaving the building, it may comprise the status of an alarm system i.e. armed and disarmed, it may comprise setting a timer and waiting for it to expire before operating according to the second rule set RS2, it may comprise detecting whether movement sensors of the building have detected movements within a predefined time period and/or the like or combinations thereof. Away criteria may in embodiments of the invention be detected based on mobile client (CI) signal strength. For example a quick signal disappearance may indicate a mobile client is turned off. A gradual signal disappearance may indicate the mobile client has left the building.

If the test T81 is negative, a timer may be set according to embodiments of the invention is thus set in relation to the optional test T82, and the system 1 may according to further embodiments of the invention, when this timer is running and before it expires, test whether a remote control of the system is operated by the user (by a user pressing a button), whether a movement sensor has registered a movement indicating the presence of a person, whether light has been manually turned on or off and/or the like. If at least one of these criteria are fulfilled before the timer expires, the timer may be reset in that there thus is a good indication that a user is still present in the building event though no approved/registered client identifiers have been registered. It is naturally understood that beyond or alternative to the timer, further criteria may be needed to be complied with before switching to the second rule set RS2.

Thus, until the (optional) further criteria indicated in test T82 have/has been fulfilled, the system 1 continues to operate the controllable units according to the first set of rules RS1 (S81) even though the client status information CSI indicates that no client is present.

If or when the further criteria indicated in test T82 have/has been fulfilled, and if no clients are detected as present, the system 1 find that sufficient criteria has been complied with to automatically start to operate the controllable units according to the second set of rules RS2 (step S82).

If however an approved/registered client identifier CI been registered before the further criteria of test T82 are fulfilled, and the client status information CSI thus have been updated to indicate that at least one user is present (see e.g. fig. 5), the system 1 will continue to operate according to the first set of rules RS1 since the test T81 will then be positive, i.e. at least one approved/registered mobile client 4, 5 is registered as present according to the client status information CSI.

In embodiments of the invention (not illustrated), away criteria may also or alternatively be implemented so that further away criteria, if complied with, allow the system to switch to operate according to the second rule set RS2 even though a mobile client is registered as preset according to the client status information CSI.

For example, if a user actively registers in the system (e.g. by means of a button 101 of a remote control 100 of the system 1, by means of another functionality such as a button for turning all lights off in the building and/or the like) that no clients are present, the system may be intentionally be forced to shift to operate according to the second rule set RS2 even though a mobile client is registered as present in the system. This may e.g. be relevant during testing of the result of operating according to the second rule set RS2, it may be relevant if a user for some reason wants to leave an approved mobile client (having an approved/registered client identifier) in the building while leaving the building and/or the like.

It is understood that in embodiments of the invention, a user may trigger the away criteria AW CRT before a client is registered as away. For example, a user may press an "away button" indicating that he or she will leave the as the last person, or other criteria may be triggered, thus making the test T82 positive before test T81. The system may then, when the user's approved/registered mobile client is also registered as away (test T81) switch to operate according to the second rule set RS2.

Fig. 9 illustrates an embodiment of switching from operating according to the second set of rules RS2 to operating according to the second set of rules RS1, where alternative predefined "presence criteria" AW CRT may be complied with so as to operate according to the first rule set RS1.

In fig. 9, if at least one mobile client is registered (test T91) as present according to the client status information CSI, the system 1 shifts from operating according to the second rule set RS2, to operate according to the first rule set RS1 (Step S92). However, if an alternative "presence criteria" PR CRT. is/are fulfilled (test T92), the system also switches from operating according to the second rule set RS2, to operate according to the first rule set RS1 (Step S92). These further "presence criteria" PR CRT may comprise that a movement sensor registers a movement within the building comprising the system 1, it may comprise that a user presses a "home" button inside the building comprising the system, thus indicating that an approved user (since the person managed to get inside by means of unlocking a door) has arrived, it may comprise that a user operates a remote control of the system and/or the like. However, if a client has not been registered as present (test T91) and the "presence criteria" PR. CRT are not complied with, the system continues to operate according to the second rule set RS2 (step S91).

The further "presence criteria" PR CRT may in embodiments of the invention comprise that e.g. presence detection sensor device(s) provide(s) input that is/are used as "presence criteria" PR CRT. Such sensor may comprise a movement sensor, a sensor for detecting heat radiations from persons and provide output based thereon, it may comprise a camera or other means that are able to detect whether it is a human that is detected compared to e.g. a dog or another animal, and/or the like.

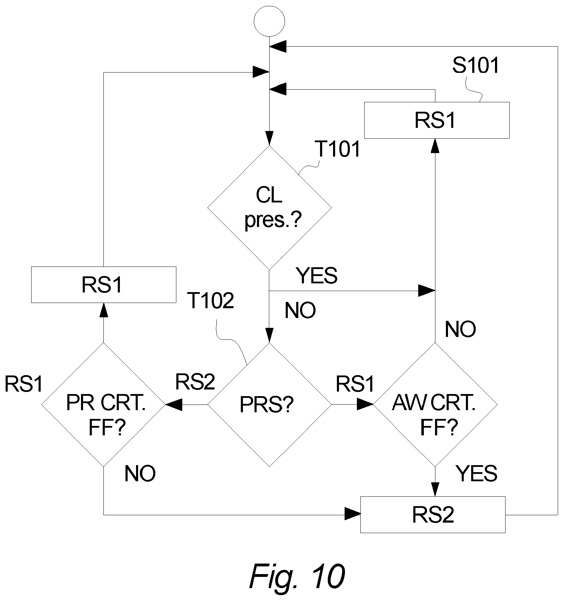

Fig. 10 illustrates an embodiment of the invention, comprising a combination of the controls according to the embodiments of fig. 8 and 9.

In step T101, the system determines if at least one mobile client is registered as present according to the client status information CSI. If a client is registered as present, the system operates according to the first rule set. RS1 (step S101). If no mobile clients are registered as present, it is determined (test T102) which rule set RS1, RS2 that is currently active. If the system operates according to the first rule set RS1 (thus indicating that a client was until recently registered as present), the "Away criteria" AW. CRT are tested as described in relation to fig. 8 above. If on the other hand, the system operates according to the second rule set (thus indicating that no mobile clients have been registered as not present), the "presence criteria "PR. CRT are tested as described in relation to fig. 9 above.

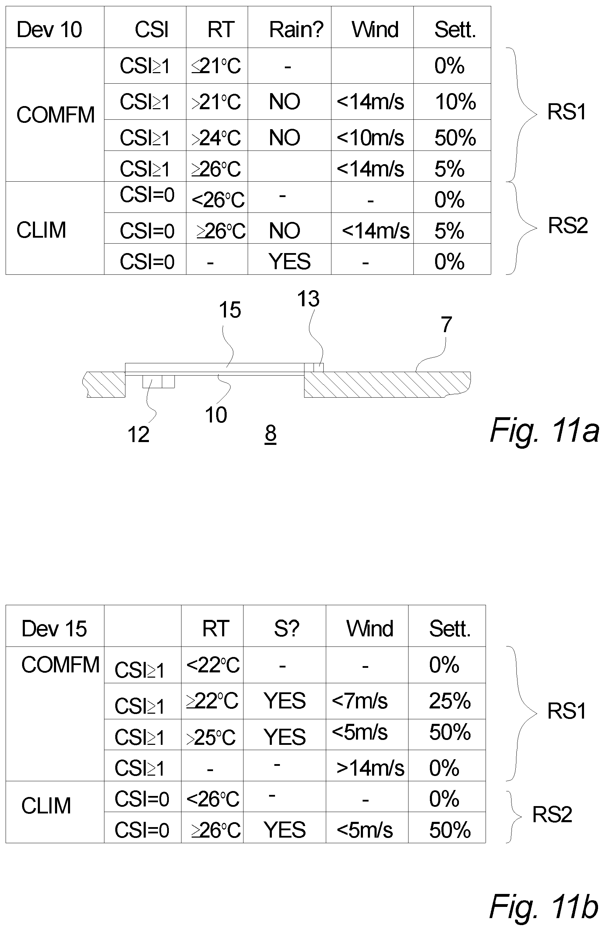

Fig. 11a and 11b illustrates embodiments of different rule sets RS1, RS2 providing different modes of operation. The first set of rules RS1 together provides a comfort operation mode COMFM for a device controlled by a controllable device. In the example of fig. 10, the window 10 is chosen as a device, which as described previously, is controlled by means of a controllable unit 13. The rules RS1, RS2 may be stored in a data storage of the controllable unit so that a simple command from a remote control, a receiver 200 and/or the like may initiate switching between the rule sets RS1, RS2.

In the present example, the rule sets are illustrated as being stored in a table, but it is understood that they may be stored in any suitable way.

Now, the first rules set RS1 providing the comfort operation mode COMFM is indented to be used when users are home. The mode thus comprises a set of rules defining how the window 10 should be automatically operated in the comfort mode COMFM, based on input from nodes of the system. The system may thus comprise a room temperature sensor, a rain sensor and a wind sensor for providing input to the comfort mode. As an example, if the room temperature RT in the room having walls comprising the window 10 is below or equal to 21°C, the window should be closed. If the temperature is above 21°C, the wind sensor provides input that the wind speed is below 14 m/s (for safety and/or comfort reasons), and the rain sensor indicates that it does not rain, the window should be opened 10%. If the temperature is above 24°C and the wind sensor provides input that the wind speed is below 10 m/, and the rain sensor indicates that it does not rain, the window should be opened 50%. If, however, the rain sensor indicates that it does rain, but the room temperature RT is above 26°C, the window may be allowed to open 5% if the wind speed is detected to be below 14%.

Now, the comfort mode/scenario COMFM however demand that at least one approved client is registered as present, e.g. tested by that the client status information CSI comprises the information that at least one approved/registered client 4, 5 is present.

In the climate mode CLIM, where preservation of energy in the building is e.g. preferred while no persons are present in the building, the window 10 is however operated according to a second set RS2 of rules. In this climate mode CLIM, as long as the room temperature is below a relatively high room temperature, such as 26°C, the window is maintained closed so as to allow e.g. the sun to warm up the building. If the temperature rises to a level above 26°C, and the wind sensor indicates a wind speed below a safety level such as 14m/s, the window may be allowed to open a predetermined amount as long as it does not rain. It may moreover, or alternatively, in embodiments of the invention comprise adjustment of a sun screening device such as an awning, shutter, blind and/or the like to reduce the temperature in one or more rooms of the building by adjusting such screening devices to allow less light to enter a window and into the room(s).

A criteria for entering the climate mode/scenario COMFM demand that no approved clients is/are registered as present, e.g. tested by that that the client status information CSI comprises the information that no approved/registered client 4, 5 is present.

As an example, an if/else assessment of the rules of fig. 11a is provided below.
If (CIS≥1 AND RT ≤21°C)
{WINDOW1=0}
Else if (CIS≥1 AND Rain = no AND RT >21°C AND wind < 14 m/s)
{WINDOW1=10}
Else if (CIS ≥1 AND Rain = no AND RT >24°C AND wind < 10 m/s)
{WINDOW1=50}
Else if (CIS ≥1 AND RT ≥26 °C AND wind < 14 m/s)
{WINDOW1=5}
*Else if* (CIS =0 AND RT < 26 °C)
{WINDOW1=0}
*Else if* (CIS =0 AND Rain = NO AND RT ≥26 °C AND wind < 14 m/s)
{WINDOW1=5}
*Else if* (CIS =0 AND Rain = YES)
{WINDOW1=0}
Else {WINDOW1=0}

The above example is only explanatory to explain how different rules may be provided. The italic "else if" above represents an example of a second set of rules RS2 while the non-italic "if' and "else if" represents an example of a first set of rules RS1.

Another example may relate to control of an awning 15. This awning may be controlled based on input from a sun sensor detecting whether the sun is shining, a wind sensor (for safety reasons), and the room temperature. In the comfort mode COMFM of the awning, the awning may be rolled out e.g. 25% if the room temperature relevant to the awning is e.g. above or equal 22°C, the sun shines and the wind speed is below a predefined amount such as 7m/s. if the room temperature RT rises and the sun is still shining, the awning may be opened to 50% of its full possible extension range, and if a wind sensor indicated a high wind such as 14 m/s, the awning may not be allowed to open.

In climate mode CLIM on the other hand, as long as the room temperature is below a relatively high predefined value, such as 26°, the awning may be fully retracted, i.e. 0% extended. And only if the sun shines, the wind speed is low, the room temperature is above or equal to a predefined value such as 26°C, the awning may be allowed to open e.g. 50% to prevent further heating of the room 8 by the sun.

It is to be understood that the above examples of the rule sets RS1, RS2 are only examples and that further or less rules may be used, other relevant parameters than the wind speed, room temperature RT, sun detection, rain detection and/or the like may be used.

The rule sets RS1, RS2 may be adapted based on the specific geographical location of the system 1. If for example the system is installed in a part of the world where the outdoor temperature is high compared to the wished indoor temperature, the climate mode CLIM and/or comfort mode COMFM may be adapted to preserve a low temperature inside the building. Thus, shutters and/or curtains may be closed in during climate mode, and the windows may be closed. And the comfort mode may hence ne adapted to let sunlight inside while preserving a low temperature to reduce the need of air conditioning by a cooling system. In other embodiments where it is relatively cold outside compared to the wished indoor temperature, shutters may be opened to let sunlight inside to heat the room during climate mode CLIM. Alternatively or additionally, the shutter(s) or other screening devices may be closed at night to e.g. preserve heat energy in the building.

This may in embodiments of the invention be controlled by a time functionality that keeps track of the time and/or date, where the system operates devices based on rule sets that are dependent on (e.g. among other criteria) time of the day and/or date.

Generally, in embodiments of the invention, the sets of rules RS1, RS2 may also be adapted based on the geographical location, date and/or time on the day so as to facilitate an automatic adjustment of one or more of the controllable units 12, 13, 22, 23, 32, 33.

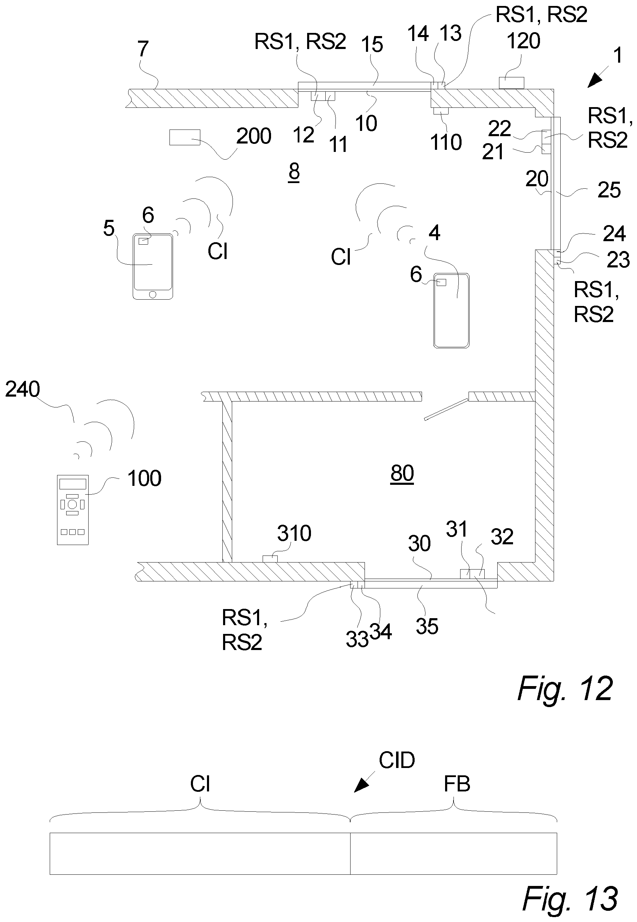

Fig. 12 illustrates a building 7 comprising a plurality of controllable units 12, 13, 22, 23, 32, 33 for controlling different devices 10, 15, 20, 25, 30, 35. The system 1 moreover comprises nodes 100, 110, 120, 310 as described previously, for transmitting control signals which are used to control the controllable units 12, 13, 22, 23, 32, 33. The system moreover comprises the receiver 200, which may be implemented in various ways as described e.g. in relation to fig. 1-3.

The building 7 comprises a plurality of windows 10, 20, 30, and further devices 15, 25, 35 such as one or more blinds, shutters, awnings, light sources and/or the like. These devices may be operated differently dependent on the sets of rules used.

It is to be understood that the first rule set RS1 as explained above may relate to rules for controlling a plurality of devices. Thus, each controllable unit 12, 13, 22, 23, 32, 33 relating to a device) may be assigned a first set of rules RS1 and a second set of rules RS2. The first set of rules RS1 may thus be during a comfort mode (if the first rule set relates to such a mode), and the second rule set RE2 may be used during climate mode (if the second rule set relates to such a mode).

As indicated, the rule sets RS1, RS2 assigned to the respective controllable unit 12, 13, 22, 23, 32 may be stored in a data storage of the respective controllable unit 12, 13, 22, 23, 32. Alternatively, in other embodiments (not illustrated), a central controller may be assigned to administrate the rule sets of the different controllable units 12, 13, 22, 23, 32 and transmit control signals to the controllable units 12, 13, 22, 23, 32 based thereon. The receiver 200 may thus transmit control signals 240 to one or more of the controllable units 12, 13, 22, 23, 32 based on received client identifiers CI4, CI5.

Some rule sets RS1, RS2 may be shared. For example, the controllable units 12, 22 may share the same set of rules in that they are arranged in a wall enclosing the same room, and are units for controlling windows. However, in other embodiments, the orientation of the windows may as illustrated be different, thus providing arguments for using at least partly different rules.

Also, in embodiments of the invention, some nodes 100, 110, 120, 310 may be shared so that their input is used for control of a plurality of controllable units 12, 13, 22, 23, 32. For example, the temperature sensor 110 may be common for the control of the controllable units 12, 13, 22, 23, 32, while the temperature sensor 310 may be used for control of units 32, 33 in that it is considered relevant in relation to controlling e.g. the window, a blind, shutter awning and/or the like based on the room temperature of the room 80 enclosed by among others the wall comprising the window 30 and the awning 35.

Fig. 13 illustrates an embodiment of client identifier data CID transmitted from a mobile client 4, 5. The client identifier data CID comprises a client identifier CI which is unique to the respective mobile client 4, 5. If the client identifier data is a probe request frame transmitted from a mobile client by means of WLAN data communication means of the respective mobile client, the client identifier CI may be the MAC address of the respective mobile client 4, 5. The client identifier data CID may moreover comprise a data frame body FB. The frame body may be used for identifying the received client identifier data CID as a relevant data package to be processed by the receiver 200, and thus the frame body may in embodiments of the invention be processed so as to identify whether the received data package may contain a relevant client identifier CI.

If the received client identifier data CID is a probe request, the frame body may moreover comprise a SSID (Service Set Identifier) and/or other information. This may in embodiments to be used by the receiver 200 to identify the data package as a relevant data package to process to identify a client identifier CI.

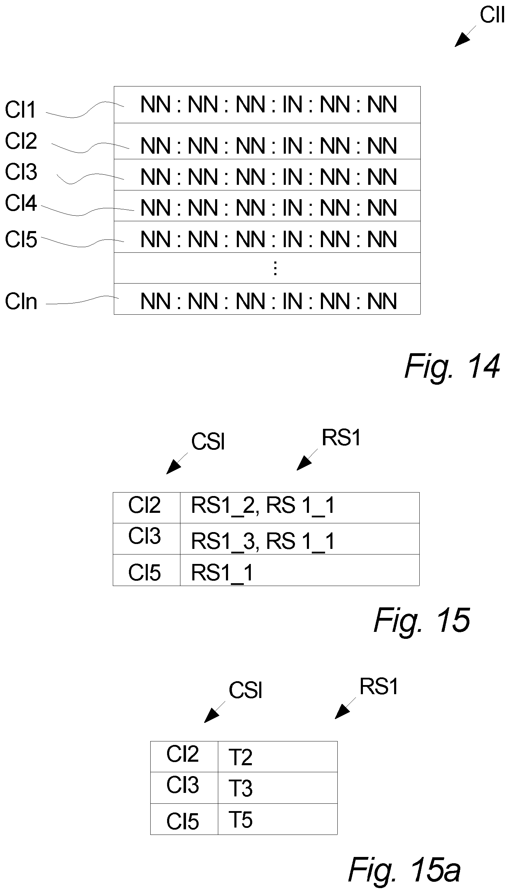

Fig. 14 illustrates an embodiment of the client information data CII in the system. The client information data CII comprises a list of approved/registered client identifiers CI1-CIn. Each of these identifiers CI1.CIn comprises the unique identification code, e.g. a MAC address or alternatively, any other suitable client identifier CI assigned to a mobile client to be transmitted from the respective client.

The client information data may be stored in any suitable data storage of the system such as in the receiver 200, in a controllable unit and/or the like.

Fig. 15 illustrates an embodiment of the invention, where different sets of first rules RS1_1, RS1_2, RS1_3 are used based on which mobile clients are registered as present in the system according to the client status information CSI.

The client status information CSI may thus comprise information for identifying which mobile client(s) that are registered as present according to received client identifiers e.g. as previously explained.

The rule set RS1_1 when used, applies a comfort mode to e.g. the living room, kitchen and bathroom as explained above by controlling the controllable units 12, 13, 22, 23, 32, 33 of the system 1 and thus devices 10, 15, 20, 25, 30, 35 of the house/apartment relevant to these rooms.

The rule set RS1_2 when used, may e.g. apply/provide a comfort mode as explained above to a first playroom by controlling controllable units 12, 13, 22, 23, 32, 33 of the system land thus devices 10, 15, 20, 25, 30, 35 of the house/apartment relevant to this specific playroom.

The rule set RS1_3 when used, may apply/provide a comfort mode as explained above to a second playroom by controlling controllable units 12, 13, 22, 23, 32, 33 of the system land thus devices 10, 15, 20, 25, 30, 35 of the house/apartment relevant to this specific second playroom.

In the example of fig. 15, three approved/registered clients are registered as present according to the client status information. More than these three clients may be registered in the client identifier information, but may not be detected as present in that they may not be within range of the receiver 200. The first client identified in this example by the client identifier CI2, and may e.g. represent a first person such as a child living in the building such as a house or apartment comprising the system 1. The mobile client of the client identifier may thus be the child's cell phone/smartphone. This child may normally be in the living room, kitchen, bathroom and his/her own playroom of the house/apartment. The client identifier CI2, when registered may thus initiate a first set of rules RS1_2, RS1_1 so that these rooms enter comfort mode

A second client identified in this example by the client identifier CI3, and may e.g. represent a second person such as a second child living in the building such as a house or apartment comprising the system 1. The mobile client of the client identifier CI3 may thus be the second child's cell phone/smartphone. This second child may normally be in the living room, kitchen, bathroom and his/her own (second) playroom of the house/apartment. The client identifier CI3, when registered in the client status identifier may thus initiate a first set of rules RS1_3, RS1_1 so that these rooms enter comfort mode.

A third client identified in this example by the client identifier CI5, and may e.g. represent a third person such as a parent living in the building such as a house or apartment comprising the system 1. The mobile client of the client identifier CI5 may thus be the parent's cell phone/smartphone. This parent may normally be in the living room, kitchen and bathroom of the house/apartment. The client identifier CI5, when registered in the client status identifier CSI may thus initiate use of the rules RS1_1 so that these rooms enter comfort mode. The parent normally does not have much to do in the children rooms, thus, these rooms may be kept to operate according to a second rule set to e.g. stay in climate mode until the respective child gets home.

So by the above, different "sub rule" sets may be used in the building for controlling the controllable units based on the registered client identifiers of the client status information.

Fig. 15a illustrates an embodiment of the invention wherein timer functions are associated with clients/client identifiers CI2, CI3, CI5 registered as present according to the client status information CSI. The client status information CSI in the example comprises the information that three registered clients are present, in this embodiment registered by the respective mobile clients client identifiers CI2, CI3, CI5. A timer function T2, T3, T5 is set for the respective client registered as present, and may be updated/reset when a client identifier of the respective client is received by the receiver. If a timer T2, T4, T5 lapse, the respective client is removed from the client status information CSI. This may in embodiments of the invention be handled at the receiver 200, and the receiver may thus in embodiments of the invention comprise timer function means to provide timer related control. The embodiment of fig. 15a may in embodiments of the invention be combined with the sets of rules described in relation to fig. 15.

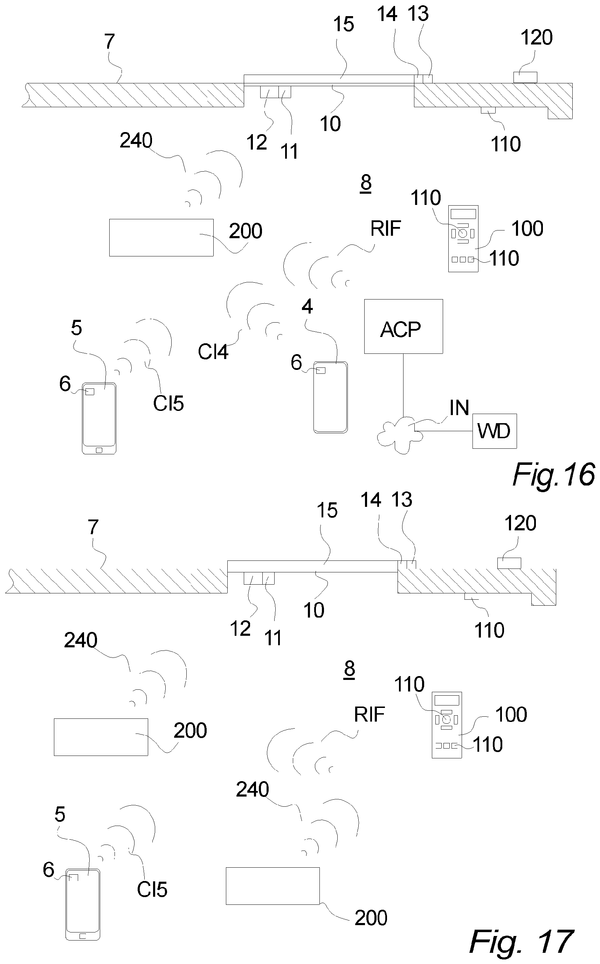

Fig. 16 illustrates an embodiment of the invention wherein the receiver 200 is configured for communicating with a wireless access point of the building 7. The wireless access point ACP is configured to provide a wireless internet connection to the mobile clients 4, 5. Thus, the wireless access point ACP, such as a WLAN router, may comprise information regarding which clients is "logged on" the router to be connected to the internet IN and thereby retrieve data from web based data sources WD such as web servers comprising web pages, mail servers and/or the like.

The receiver 200 may thus communicate with the access point ACP to retrieve e.g. registration information RINF of which mobile client(s) 4, 5 that are connected to the internet IN by means of the access point. This information may be correlated with the client identifiers CI received by the receiver 200 from the mobile clients 4, 5 to improve safety of the system. This may be especially relevant if the access point ACP needs a password/network security key to allow the mobile clients to log on, which may e.g. be relevant when using encrypted communication such as e.g. WPA (Wi-Fi Protected Access) protocol enabled encryption between the access point ACOP and mobile clients 4, 5. Thus, if the access point provides the information that a client is logged on to the access point, this may be considered as a validation of that the respective mobile client is an approved client.

Thus, if the receiver 200 receives e.g. a probe comprising a MAC address, this client identification may in embodiments of the invention be correlated with the information from the router so that a mobile is first registered as present when the mobile client is also provided with an internet connection by means of the router ACP. This may in embodiments of the invention be incorporated in one or more of the above embodiments of figs. 7-10.

Fig. 17 illustrates an embodiment of the invention wherein the system 1 comprises a plurality of receivers such as at least two, e.g. at least three such as at least five or even more receivers 200. In this embodiment, the receivers 200 may be configured to wirelessly communicate with each other to exchange e.g. client identifier information data CII, client status information CSI and/or the like, e.g. to facilitate coverage of larger buildings. Thus, for example when a receiver 200 registers a client in the client status information CSI, the client status information CSI may be transmitted to other receivers in the system so that they can act accordingly. The same may in embodiments of the invention be applied when removing a client/client identifier from the client status information CSI. This may also trigger that client status information of other receivers in the system 1 may be updated. Additionally, if a new client is to be registered in or removed from the client identifier information data CII, this information may also be provided automatically to other receivers of the system to update the client identifier information CII.

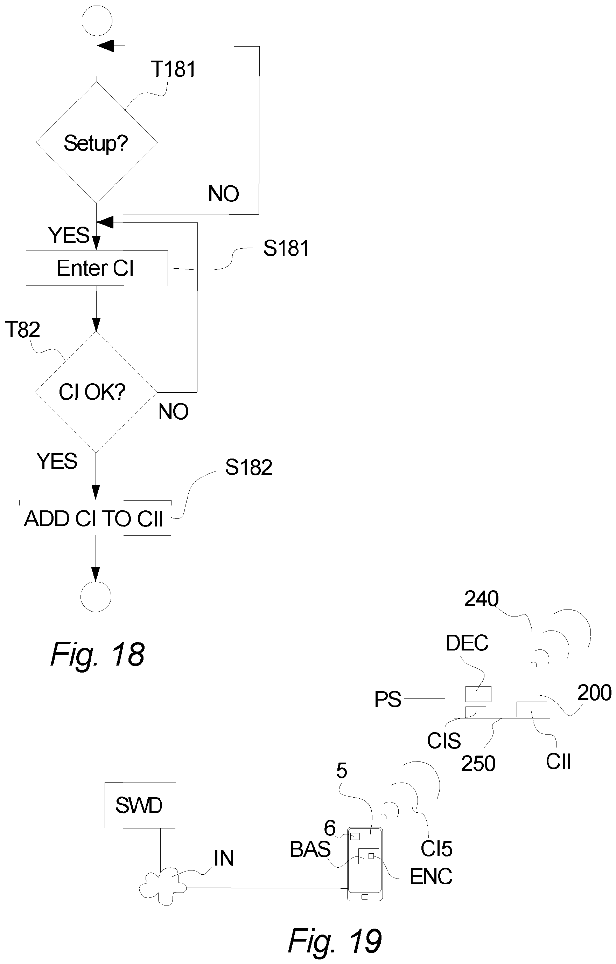

Fig. 18 illustrates an embodiment of a flow chart relating to controlling the client identifier information data CII.

In test T181 (Setup?), the system 1 tests whether to enter a setup mode. This may comprise testing if e.g. a button or a predefined combination of buttons of one or more components of a system 1 such as on a node, e.g. a remote control, a button on a controllable unit, a button on a receiver 200 and/or the like is pressed by a user. Pressing this button/button combination may trigger entering a setup mode.

I the setup mode, a user may in step S181 (Enter CI) by means of a remote control of the system 1 manually enter a client identification CI to be part of the client identifier information data CII of the system 1. Alternatively, the user may turn off and on his/her mobile client such as a mobile client (or at least some of the wireless communication means of the client) while in the setup mode, and the receiver 200 may thus register the mobile client's Client identifier CI and incorporate it in the client identifier information data CII.

In test 182 (CI OK?) (which in embodiments of the invention may be optional), the system prompts the user to validate the entered client identification CI. If the user accepts the client identifier registered in step S181, the client identifier CI is added to the client identifier information data CII of the system 1 to be considered as an approved/registered client identifier.

A user may in further embodiments, during the setup (not illustrated), add or select sets of rules to be used when the entered client identifier CI is registered as present in the client status information as described in relation to among others fig. 15.

The user may then (not illustrated) be asked whether to add or remove further client identifiers before leaving the setup mode.

Fig. 19 illustrates example of an embodiment of the invention relating to a mobile client comprising a software program product for being implemented in and processed by a mobile client 5.

The mobile client 5 comprises building automation software BAS which is configured for transmitting a unique client identifier CI 5 from the mobile client 5 to the receiver 200.

The building automation software BAS is configured to e.g. be downloaded over the internet IN from external database SWD. The building automation software BAS is dedicated to building automation systems like the building automation system 1, configured so that when it is executed by/at the mobile client 5, it transmits the client identifier CI of the respective mobile client 5, e.g. as disclosed above and/or below.

The building automation software BAS may be an application (APP) configured to be executed on smartphones, tablet computers and other mobile devices. It may be made available through application distribution platforms, which are typically operated by the owner of the operation system of the respective mobile client/device. The building automation software BAS may thus be downloaded from the platform to a target device(s) 4, 5.

The building automation software BAS is, after installation, executed on the mobile device 5 and thus utilizes data processor(s), data storage, and battery power from the mobile device 5 when executed on the device 5.

In embodiments of the invention, the building automation software BAS is configured for transmitting encrypted and/or coded client identifiers, and for this purpose, the building automation software BAS may comprise encryption and/or coding means ENC for encrypting a unique client identifier of the mobile client so that a coded and/or encrypted client identifier may be transmitted to the receiver 200. The receiver 200 of the system 1 comprises decryption means DEC configured for decrypting/decoding the received data CI5 from the mobile client MC so as to extract a client identifier of the respective mobile client 5 so that it can be used for determining if the mobile client 5 is an approved/registered mobile client in the system 1, e.g. buy correlation with the client identifier information CII.

The coding/encryption and decryption/decoding may be performed in any suitable way to enable that the client identifier CI5 transmitted from the mobile client 5 cannot be extracted directly from the transmitted data. Thus, the building automation software BAS may comprise one or more encryption algorithms for encrypting the unique identifier CI of the client 5, and the receiver 200 thus comprises one or more decryption algorithms for decrypting the received encrypted data to extract the client identifier.

Generally, in embodiments of the invention, in the event that the transmitted client identifier is coded, the code may be generated based on a unique identification (such as a MAC, Serial number and/or another unique identification assigned to the mobile client) of the mobile client, and a coding algorithm. Thus, the coded identifier may not give away the unique identifier itself, and only the receiver may thus be able to identify the mobile client from the coded identification. Hence, it is understood that the transmitted unique client identifiers from mobile clients may also in embodiments of the invention be represented by a coded signal which, upon processing by the receiver identifies the client.

In embodiments of the invention, the one or more mobile client(s) 4, 5 may be configured for transmitting said client identifier(s) CI upon receipt of a client identifier request transmitted from said system, e.g. from the receiver 200. The receiver may thus transmit a request for a client identifier, and the building automation software BAS of the client 4 may thus be configured to process this request and transmit a response signal accordingly, comprising the client identifier CI.

Thus, it is e.g. understood that the system 1 may comprise one or a plurality of controllable units, one or a plurality of nodes, one or more receivers and/or the like.

Generally, it is understood that the component such as a docking station comprising the receiver 200, or another component of the system may be configured for performing one or more of the embodiments of e.g. figs. 5-12 and 18, storing of rules RS1, RS2, management of clients and/or the like. This component may in embodiments of the invention preferably be external to controllable units and/or sensors and remote control(s) of the system 1. It may thus, in embodiments of the invention be a device 200 comprising it's own casing 250 as illustrated in e.g. fig. 1 and/or 4. So, it is understood that the device referred to as the receiver 200 in embodiments of the invention may be configured for storing and handling the sets of rules RS1, RS2, comprise a list of controllable units and/or nodes of the system 1, and may thus be configured for transmitting wireless control signals to the controllable units 12, 13, 22, 23, 32, 33 of the system 1 based on processing of client identifiers CI, signals from sensors and/or remote control(s) and/or the like.

## Claims

1. A method of controlling a building automation system (1) for controlling at least one device (10, 15, 20, 25, 30, 35) selected from a window, blind, shutter, awning, door, ventilation shaft and/or light source, wherein said building automation system (1) comprises one or more controllable units (12, 13, 22, 23, 32, 33) being associated with said at least one device (10, 15, 20, 25, 30, 35),
wherein one or more mobile clients (4, 5) wirelessly transmits a client identifier (CI, CI1-CI5) for identifying the mobile client (4, 5), and wherein said building automation system (1) comprises a receiver (200), which receiver (200) receives said client identifier(s) (CI, CI1-CI5) transmitted from said one or more mobile clients (4, 5),
wherein said received client identifiers (CI, CI1-CI5) are processed based on client identifier information (CII) of said system (1), said client identifier information (CII) comprising information of one or more registered client identifiers (CI, CI1-CI5) of mobile clients (4, 5),
wherein said system (1) comprises client status information (CSI) comprising information of registered mobile client(s) (4, 5) which are registered as present, and wherein said client status information (CSI) is updated according to said processing of received client identifiers (CI, CI1-CI5), **characterized by**:
wherein at least one of said one or more controllable units (12, 13, 22, 23, 22, 23) is controlled according to a first predefined set of rules (RS1, RS 1_1, RS 1_2, RS 1_3) if at least one registered mobile client (4, 5) is registered as present according to said client status information (CSI), and
wherein said at least one controllable unit (12, 13, 22, 23, 22, 23) is controlled according to a second predefined set of rules (RS2) if no registered mobile clients (4, 5) are registered as present according to said client status information (CSI),
wherein said client identifier information data (CII) comprises information of a plurality of registered mobile clients (4, 5), wherein different predefined sets of rules (RS 1_1, RS 1_2, RS 1_3) are used for operating one or more controllable units (12, 13, 22, 23, 32, 33) dependent on which registered mobile client(s) (4, 5) that is/are determined as present.

2. A method according to claim 1, wherein said receiver (200) is arranged in or at the building (7) comprising said building automation system (1).

3. A method according to claim 1 or 2, wherein said system comprises one or more nodes (100, 110, 120, 310) such as one or more sensors and/or remote controls for transmitting control and/or parameter signals for use during control of said at least one controllable unit (12, 13, 22, 23, 22, 23).

4. A method according to claim 3, wherein said receiver (200) is configured for receiving control and/or parameter signals from one or more of said nodes (100, 110, 120, 310), and wherein said receiver (200) is configured for transmitting control signals (240) to said one or more controllable units (12, 13, 22, 23, 22, 23) based on said signals from said nodes.

5. A method according to any of the preceding claims, wherein said receiver (200) wirelessly transmits control signals (240) to one or more of said one or more controllable units (12, 13, 22, 23, 32, 33) based on at least received and processed client identifiers (CI, CI1-CI5).

6. A method according to any of the preceding claims, wherein said receiver (200) is configured for receiving client identifiers (CI, CI4, CI5) transmitted directly from mobile clients (4, 5).

7. A method according to any of the preceding claims, wherein one or more further away criteria (AW CRT) is/are to be fulfilled before switching from operating said one or more controllable units (12, 13, 22, 23, 22, 23) according to said first predefined set of rules (RS1, RS 1_1, RS 1_2, RS1_3) to operate one or more of said one or more controllable units (12, 13, 22, 23, 22, 23) according to said second set of rules (RS2), wherein said further away criteria (AW CRT) comprise at least one timer function.

8. A method according to any of the preceding claims, wherein one or more further presence criteria are used to trigger switching from operating said one or more controllable units according to said second set of rules (RS2) to operate one or more of said one or more controllable units according to said first set of rules (RS1, RS 1_1, RS 1_2, RS1_3).

9. A method according to any of the preceding claims, wherein said first predefined set of rules (RS1, RS 1_1, RS 1_2, RS 1_3) result in a control mode having a safety level that is lower than a safety level obtained by a control mode provided by said predefined second set of rules (RS2).

10. A method according to any of the preceding claims, wherein said associated device is a screening device such as an awning, a film coating, a blind or a shutter, and wherein at least one of said one or more controllable unit(s) (12, 13, 22, 23, 32, 33) adjusts said associated device into a plurality of different predefined positions so as to adjust the amount of light that is allowed to enter.

11. A method according to any of the preceding claims, wherein one or more of said one or more mobile clients (4, 5) is/are a personal mobile electronic device such as a cellphone, e.g. a smartphone, a tablet, and/or a Personal Digital Assistant (PDA).

12. A method according to any of the preceding claims, wherein said client identifier (CI, CI1-CI5) is based on a unique identifier of said one or more mobile clients (4, 5), such as an unique identifier of a network interface of said one or more mobile clients (4, 5).

13. A method according to any of the preceding claims, wherein said client identifier (CI, CI1-CI5) comprises a Media Access Control (MAC) address of one or more mobile clients (MC).

14. A method according to any of the preceding claims, wherein said receiver (2) receives probe requests transmitted from mobile clients (4, 5), and wherein said probe requests are processed so as to identify the client identifier (CI, CI4, CI5) of the mobile client (4, 5) from which the probe request originates.

15. A method according to any of the preceding claims, wherein said client identifiers (CI4, CI5, CI) are transmitted by means of Wireless Local Area Network means (6) of said at least one mobile client (MC) and wherein said receiver (200) is configured for scanning for client identifiers (CI) by means of Wireless Local Area Network (WLAN) means of said receiver (200).

16. A method according to any of the preceding claims, wherein a timer function (T1, T2, T3) is associated with clients registered as present according to said client status information (CSI), and wherein said client status information (CSI) is updated when said timer function (T1, T2, T3) lapse.

17. A receiver (200) for a building automation system (1), said receiver (200) being configured for receiving and processing client identifiers (CI, CI1-CI5) transmitted from mobile clients (4, 5),
wherein said receiver (200) is configured for processing said client said received client identifiers (CI) based on client identifier information data (CII), said client identifier information data (CII) comprising information of one or more registered client identifiers (CI, CI1-CI5) of mobile clients (4, 5),
wherein said receiver (200) is configured for updating client status information (CSI) based on said processing, which client status information (CSI) comprises information of registered mobile client(s) (4, 5) registered as present, **characterized by** wherein one or more controllable units (12, 13, 22, 23, 22, 23) of said system (1) is/are configured to be controlled according to a first predefined set of rules (RS1, RS 1_1, RS 1_2, RS 1_3) if at least one registered mobile client (4, 5) is registered as present according to said client status information (CSI), and
wherein said at least one controllable unit (12, 13, 22, 23, 22, 23) is controlled according to a second predefined set of rules (RS2) if no registered mobile clients (4, 5) is/are registered as present according to said client status information (CSI),
wherein said client identifier information data (CII) comprises information of a plurality of registered mobile clients (4, 5), wherein different predefined sets of rules (RS 1_1, RS 1_2, RS 1_3) are used for operating one or more controllable units (12, 13, 22, 23, 32, 33) dependent on which registered mobile client(s) (4, 5) that is/are determined as present.

## Patentansprüche

1. Verfahren zum Steuern eines Gebäudeautomationssystems (1) zum Steuern von zumindest einer Vorrichtung (10, 15, 20, 25, 30, 35) ausgewählt aus einem Fenster, einer Jalousie, einem Rollladen, einer Markise, einer Tür, einem Lüftungsschacht und/oder einer Lichtquelle, wobei das Gebäudeautomationssystem (1) eine oder mehrere steuerbare Einheiten (12, 13, 22, 23, 32, 33) umfasst, die mit der zumindest einen Vorrichtung (10, 15, 20, 25, 30, 35) verbunden sind,
wobei ein oder mehrere mobile Clients (4, 5) eine Client-Kennung (CI, CI1-CI5) zum Identifizieren des mobilen Clients (4, 5) drahtlos übertragen und wobei das Gebäudeautomationssystem (1) einen Empfänger (200) umfasst, wobei der Empfänger (200) die Client-Kennung(en) (CI, CI1-CI5) empfängt, die von dem einen oder den mehreren mobilen Clients (4, 5) übertragen werden,
wobei die empfangenen Client-Kennungen (CI, CI1-CI5) basierend auf Client-Kennungsinformationen (CII) des Systems (1) verarbeitet werden, wobei die Client-Kennungsinformationen (CII) Informationen über eine oder mehrere registrierte Client-Kennungen (CI, CI1-CI5) von mobilen Clients (4, 5) umfassen,
wobei das System (1) Client-Statusinformationen (CSI) umfasst, die Informationen über (einen) registrierte(n) mobile(n) Client(s) (4, 5) umfassen, die als vorhanden registriert sind, und
wobei die Client-Statusinformationen (CSI) gemäß der Verarbeitung von empfangenen Client-Kennungen (CI, CI1-CI5) aktualisiert werden, **gekennzeichnet durch**:
wobei zumindest eine von der einen oder den mehreren steuerbaren Einheiten (12, 13, 22, 23, 22, 23) gemäß einem ersten vordefinierten Regelsatz (RS1, RS 1_1, RS 1_2, RS 1_3) gesteuert wird, wenn zumindest ein registrierter mobiler Client (4, 5) gemäß den Client-Statusinformationen (CSI) als vorhanden registriert ist, und
wobei die zumindest eine steuerbare Einheit (12, 13, 22, 23, 22, 23) gemäß einem zweiten vordefinierten Regelsatz (RS2) gesteuert wird, wenn keine registrierten mobilen Clients (4, 5) gemäß den Client-Statusinformationen (CSI) als vorhanden registriert sind,
wobei die Client-Kennungsinformationsdaten (CII) Informationen über eine Vielzahl von registrierten mobilen Clients (4, 5) umfassen, wobei unterschiedliche vordefinierte Regelsätze (RS 1_1, RS 1_2, RS 1_3) verwendet werden, um eine oder mehrere steuerbare Einheiten (12, 13, 22, 23, 32, 33) zu betreiben, abhängig davon, welche(r) registrierte(n) mobile(n) Client(s) (4, 5) als vorhanden bestimmt ist/sind.

2. Verfahren nach Anspruch 1, wobei der Empfänger (200) in oder an dem Gebäude (7) angeordnet ist, welches das Gebäudeautomationssystem (1) umfasst.

3. Verfahren nach Anspruch 1 oder 2, wobei das System einen oder mehrere Knoten (100, 110, 120, 310) wie zum Beispiel einen oder mehrere Sensoren und/oder Fernbedienungen umfasst, um Steuer- und/oder Parametersignale zur Verwendung während der Steuerung der zumindest einen steuerbaren Einheit (12, 13, 22, 23, 22, 23) zu übertragen.

4. Verfahren nach Anspruch 3, wobei der Empfänger (200) konfiguriert ist, um Steuer- und/oder Parametersignale von einem oder mehreren der Knoten (100, 110, 120, 310) zu empfangen, und wobei der Empfänger (200) konfiguriert ist, um Steuersignale (240) an die eine oder die mehreren steuerbaren Einheiten (12, 13, 22, 23, 22, 23) basierend auf den Signalen von den Knoten zu übertragen.

5. Verfahren nach einem der vorhergehenden Ansprüche, wobei der Empfänger (200) basierend auf zumindest empfangenen und verarbeiteten Client-Kennungen (CI, CI1-CI5) drahtlos Steuersignale (240) an eine oder mehrere von der einen oder den mehreren steuerbaren Einheiten (12, 13, 22, 23, 32, 33) überträgt.

6. Verfahren nach einem der vorhergehenden Ansprüche, wobei der Empfänger (200) konfiguriert ist, um Client-Kennungen (CI, CI4, CI5) zu empfangen, die direkt von mobilen Clients (4, 5) übertragen werden.

7. Verfahren nach einem der vorhergehenden Ansprüche, wobei ein oder mehrere weiter entfernte Kriterien (AW CRT) zu erfüllen ist/sind, bevor von dem Betreiben der einen oder mehreren steuerbaren Einheiten (12, 13, 22, 23, 22, 23) gemäß dem ersten vordefinierten Regelsatz (RS1, RS 1_1, RS 1_2, RS1_3) zu dem Betreiben von einer oder mehreren von der einen oder den mehreren steuerbaren Einheiten (12, 13, 22, 23, 22, 23) gemäß dem zweiten Regelsatz (RS2) umgeschaltet wird, wobei die weiter entfernten Kriterien (AW CRT) zumindest eine Zeitgeberfunktion umfassen.

8. Verfahren nach einem der vorhergehenden Ansprüche, wobei ein oder mehrere weitere Anwesenheitskriterien verwendet werden, um das Umschalten von dem Betreiben der einen oder mehreren steuerbaren Einheiten gemäß dem zweiten Regelsatz (RS2) zu dem Betreiben von einer oder mehreren von der einen oder den mehreren steuerbaren Einheiten gemäß dem ersten Regelsatz (RS1, RS 1_1, RS 1_2, RS1_3) auszulösen.

9. Verfahren nach einem der vorhergehenden Ansprüche, wobei der erste vordefinierte Regelsatz (RS1, RS 1_1, RS 1_2, RS 1_3) zu einem Steuermodus führt, der ein Sicherheitsniveau aufweist, das niedriger als ein Sicherheitsniveau ist, das durch einen Steuermodus erhalten wird, der durch den vordefinierten zweiten Regelsatz (RS2) bereitgestellt wird.

10. Verfahren nach einem der vorhergehenden Ansprüche, wobei die verbundene Vorrichtung eine Abschirmvorrichtung wie zum Beispiel eine Markise, eine Filmbeschichtung, eine Jalousie oder ein Rollladen ist und wobei zumindest eine von der einen oder den mehreren steuerbaren Einheiten (12, 13, 22, 23, 32, 33) die verbundene Vorrichtung in eine Vielzahl von unterschiedlichen vordefinierten Positionen einstellt, um die Lichtmenge einzustellen, die eintreten darf.

11. Verfahren nach einem der vorhergehenden Ansprüche, wobei einer oder mehrere von dem einen oder den mehreren mobilen Clients (4, 5) eine persönliche mobile elektronische Vorrichtung wie zum Beispiel ein Mobiltelefon, z. B. ein Smartphone, ein Tablet und/oder ein persönlicher digitaler Assistent (PDA) ist/sind.

12. Verfahren nach einem der vorhergehenden Ansprüche, wobei die Client-Kennung (CI, CI1-CI5) auf einer eindeutigen Kennung des einen oder der mehreren mobilen Clients (4, 5) basiert, wie zum Beispiel einer eindeutigen Kennung einer Netzwerkschnittstelle des einen oder der mehreren mobilen Clients (4, 5).

13. Verfahren nach einem der vorhergehenden Ansprüche, wobei die Client-Kennung (CI, CI1-CI5) eine Media-Access-Control-(MAC-)Adresse von einem oder mehreren mobilen Clients (MC) umfasst.

14. Verfahren nach einem der vorhergehenden Ansprüche, wobei der Empfänger (2) Probe Requests empfängt, die von mobilen Clients (4, 5) übertragen werden, und wobei die Probe Requests verarbeitet werden, um die Client-Kennung (CI, CI4, CI5) des mobilen Clients (4, 5) zu identifizieren, von dem der Probe Request stammt.

15. Verfahren nach einem der vorhergehenden Ansprüche, wobei die Client-Kennungen (CI4, CI5, CI) mittels drahtloser lokaler Netzwerkmittel (6) des zumindest einen mobilen Clients (MC) übertragen werden und wobei der Empfänger (200) konfiguriert ist, um mittels drahtloser lokaler Netzwerkmittel (WLAN) des Empfängers (200) nach Client-Kennungen (CI) zu suchen.

16. Verfahren nach einem der vorhergehenden Ansprüche, wobei eine Zeitgeberfunktion (T1, T2, T3) mit Clients verbunden ist, die gemäß den Client-Statusinformationen (CSI) als vorhanden registriert sind, und wobei die Client-Statusinformationen (CSI) aktualisiert werden, wenn die Zeitgeberfunktion (T1, T2, T3) verfällt.

17. Empfänger (200) für ein Gebäudeautomationssystem (1), wobei der Empfänger (200) konfiguriert ist, um Client-Kennungen (CI, CI1-CI5) zu empfangen und zu verarbeiten, die von mobilen Clients (4, 5) übertragen werden,
wobei der Empfänger (200) konfiguriert ist, um den Client die empfangenen Client-Kennungen (CI) basierend auf Client-Kennungsinformationsdaten (CII) zu verarbeiten, wobei die Client-Kennungsinformationsdaten (CII) Informationen über eine oder mehrere registrierte Client-Kennungen (CI, CI1-CI5) von mobilen Clients (4, 5) umfassen,
wobei der Empfänger (200) konfiguriert ist, um Client-Statusinformationen (CSI) basierend auf der Verarbeitung zu aktualisieren, wobei die Client-Statusinformationen (CSI) Informationen über (einen) registrierte(n) mobile(n) Client(s) (4, 5) umfassen, die als vorhanden registriert sind, **gekennzeichnet durch**
wobei eine oder mehrere steuerbare Einheiten (12, 13, 22, 23, 22, 23) des Systems (1) konfiguriert ist/sind, um gemäß einem ersten vordefinierten Regelsatz (RS1, RS 1_1, RS 1_2, RS 1_3) gesteuert zu werden, wenn zumindest ein registrierter mobiler Client (4, 5) gemäß den Client-Statusinformationen (CSI) als vorhanden registriert ist, und
wobei die zumindest eine steuerbare Einheit (12, 13, 22, 23, 22, 23) gemäß einem zweiten vordefinierten Regelsatz (RS2) gesteuert wird, wenn keine registrierten mobilen Clients (4, 5) gemäß den Client-Statusinformationen (CSI) als vorhanden registriert ist/sind,
wobei die Client-Kennungsinformationsdaten (CII) Informationen über eine Vielzahl von registrierten mobilen Clients (4, 5) umfassen, wobei unterschiedliche vordefinierte Regelsätze (RS 1_1, RS 1_2, RS 1_3) verwendet werden, um eine oder mehrere steuerbare Einheiten (12, 13, 22, 23, 32, 33) zu betreiben, abhängig davon, welche(r) registrierte(n) mobile(n) Client(s) (4, 5) als vorhanden bestimmt ist/sind.

## Revendications

1. Procédé de commande d'un système d'automatisation de bâtiment (1) destiné à commander au moins un dispositif (10, 15, 20, 25, 30, 35) sélectionné parmi une fenêtre, un store, un volet, un auvent, une porte, un conduit de ventilation et / ou une source de lumière, dans lequel ledit système d'automatisation de bâtiment (1) comprend une ou plusieurs unités contrôlables (12, 13, 22, 23, 32, 33) étant associées audit au moins un dispositif (10, 15, 20, 25, 30, 35), dans lequel un ou plusieurs clients mobiles (4, 5) transmettent sans fil un identifiant de client (CI, CI1 à CI5) destiné à identifier le client mobile (4, 5), et dans lequel ledit système d'automatisation de bâtiment (1) comprend un récepteur (200), lequel récepteur (200) reçoit ledit ou lesdits identifiants de client (CI, CI1 à CI5) transmis par lesdits un ou plusieurs clients mobiles (4, 5), dans lequel lesdits identifiants de client reçus (CI, CI1 à CI5) sont traités sur la base d'informations d'identifiant de client (CII) dudit système (1), lesdites informations d'identifiant de client (CII) comprenant des informations d'un ou plusieurs identifiants de client (CI, CI1 à CI5) enregistrés de clients mobiles (4, 5), dans lequel ledit système (1) comprend des informations de statut du client (CSI) comprenant des informations sur le ou les clients mobiles enregistrés (4, 5) qui sont enregistrés comme présents, et dans lequel lesdites informations de statut du client (CSI) sont mises à jour selon ledit traitement des identifiants de clients (CI, CI1 à CI5) reçus, **caractérisé par** :
dans lequel au moins une desdites une ou plusieurs unités contrôlables (12, 13, 22, 23, 22, 23) est commandée selon un premier ensemble prédéfini de règles (RS1, RS 1_1, RS 1_2, RS 1_3) si au moins un client mobile enregistré (4, 5) est enregistré comme présent selon lesdites informations de statut du client (CSI), et dans lequel ladite au moins une unité contrôlable (12, 13, 22, 23, 22, 23) est commandée selon un deuxième ensemble prédéfini de règles (RS2) si aucun client mobile enregistré (4, 5) n'est enregistré comme présent selon lesdites informations de statut du client (CSI), dans lequel lesdites données d'informations d'identifiant client (CII) comprennent des informations d'une pluralité de clients mobiles enregistrés (4, 5), dans lequel différents ensembles prédéfinis de règles (RS 1_1, RS 1_2, RS 1_3) sont utilisés pour faire fonctionner une ou plusieurs unités contrôlables (12, 13, 22, 23, 32, 33) en fonction du ou des clients mobiles enregistrés (4, 5) qui est / sont déterminés comme présents.

2. Procédé selon la revendication 1, dans lequel ledit récepteur (200) est agencé dans ou au niveau du bâtiment (7) comprenant ledit système d'automatisation de bâtiment (1).

3. Procédé selon la revendication 1 ou 2, dans lequel ledit système comprend un ou plusieurs nœuds (100, 110, 120, 310) tels qu'un ou plusieurs capteurs et / ou télécommandes destinés à transmettre des signaux de commande et / ou de paramètre à utiliser pendant la commande de ladite au moins une unité contrôlable (12, 13, 22, 23, 22, 23).

4. Procédé selon la revendication 3, dans lequel ledit récepteur (200) est configuré pour recevoir des signaux de commande et / ou de paramètre d'un ou plusieurs desdits nœuds (100, 110, 120, 310), et dans lequel ledit récepteur (200) est configuré pour transmettre des signaux de commande (240) auxdites une ou plusieurs unités contrôlables (12, 13, 22, 23, 22, 23) sur la base desdits signaux provenant desdits nœuds.

5. Procédé selon l'une quelconque des revendications précédentes, dans lequel ledit récepteur (200) transmet sans fil des signaux de commande (240) à une ou plusieurs desdites une ou plusieurs unités contrôlables (12, 13, 22, 23, 32, 33) sur la base au moins d'identifiants de client (CI, CI1 à CI5) reçus et traités.

6. Procédé selon l'une quelconque des revendications précédentes, dans lequel ledit récepteur (200) est configuré pour recevoir des identificateurs de client (CI, CI4, CI5) transmis directement à partir de clients mobiles (4, 5).

7. Procédé selon l'une quelconque des revendications précédentes, dans lequel un ou plusieurs critères d'absence supplémentaires (AW CRT) doivent être remplis avant de passer du fonctionnement desdites une ou plusieurs unités contrôlables (12, 13, 22, 23, 22, 23) selon ledit premier ensemble prédéfini de règles (RS1, RS 1_1, RS 1_2, RS1_3) vers le fonctionnement d'une ou plusieurs desdites unités contrôlables (12, 13, 22, 23, 22, 23) selon ledit deuxième ensemble de règles (RS2), dans lequel lesdits critères d'absence supplémentaires (AW CRT) comprennent au moins une fonction de minuterie.

8. Procédé selon l'une quelconque des revendications précédentes, dans lequel un ou plusieurs critères de présence supplémentaires sont utilisés pour déclencher le passage du fonctionnement desdites une ou plusieurs unités contrôlables selon ledit deuxième ensemble de règles (RS2) vers le fonctionnement d'une ou plusieurs desdites une ou plusieurs unités contrôlables selon ledit premier ensemble de règles (RS1, RS 1_1, RS 1_2, RS1_3).

9. Procédé selon l'une quelconque des revendications précédentes, dans lequel ledit premier ensemble prédéfini de règles (RS1, RS 1_1, RS 1_2, RS 1_3) aboutit à un mode de commande ayant un niveau de sécurité qui est inférieur à un niveau de sécurité obtenu par un mode de commande fourni par ledit deuxième ensemble prédéfini de règles (RS2).

10. Procédé selon l'une quelconque des revendications précédentes, dans lequel ledit dispositif associé est un dispositif de protection tel qu'un auvent, un revêtement de film, un store ou un volet, et dans lequel au moins une desdites une ou plusieurs unités contrôlables (12, 13, 22, 23, 32, 33) ajuste ledit dispositif associé dans une pluralité de positions prédéfinies différentes de manière à ajuster la quantité de lumière qui est autorisée à entrer.

11. Procédé selon l'une quelconque des revendications précédentes, dans lequel un ou plusieurs desdits un ou plusieurs clients mobiles (4, 5) est / sont un dispositif électronique mobile personnel tel qu'un téléphone portable, par exemple un smartphone, une tablette et / ou un assistant numérique personnel (PDA).

12. Procédé selon l'une quelconque des revendications précédentes, dans lequel ledit identifiant de client (CI, CI1 à CI5) est basé sur un identifiant unique desdits un ou plusieurs clients mobiles (4, 5), tel qu'un identifiant unique d'une interface réseau dudit un ou plusieurs clients mobiles (4, 5).

13. Procédé selon l'une quelconque des revendications précédentes, dans lequel ledit identifiant de client (CI, CI1 à CI5) comprend une adresse de contrôle d'accès au support (MAC) d'un ou plusieurs clients mobiles (MC).

14. Procédé selon l'une quelconque des revendications précédentes, dans lequel ledit récepteur (2) reçoit des demandes de sonde transmises par des clients mobiles (4, 5), et dans lequel lesdites demandes de sonde sont traitées de manière à identifier l'identifiant de client (CI, CI4, CI5) du client mobile (4, 5) duquel provient la requête de sonde.

15. Procédé selon l'une quelconque des revendications précédentes, dans lequel lesdits identifiants de client (CI4, CI5, CI) sont transmis au moyen d'un moyen de réseau local sans fil (6) dudit au moins un client mobile (MC) et dans lequel ledit récepteur (200) est configuré pour rechercher des identifiants de client (CI) au moyen d'un moyen de réseau local sans fil (WLAN) dudit récepteur (200).

16. Procédé selon l'une quelconque des revendications précédentes, dans lequel une fonction de minuterie (T1, T2, T3) est associée aux clients enregistrés comme présents selon lesdites informations de statut du client (CSI), et dans lequel lesdites informations de statut du client (CSI) sont mises à jour lorsque ladite fonction de minuterie (T1, T2, T3) est écoulée.

17. Récepteur (200) pour un système d'automatisation de bâtiment (1), ledit récepteur (200) étant configuré pour recevoir et traiter des identifiants de client (CI, CI1 à CI5) transmis à partir de clients mobiles (4, 5), dans lequel ledit récepteur (200) est configuré pour traiter lesdits identifiants de client (CI) reçus dudit client sur la base de données d'informations d'identifiant de client (CII), lesdites données d'informations d'identifiant de client (CII) comprenant des informations d'un ou plusieurs identifiants de client enregistrés (CI, CI1 à CI5) de clients mobiles (4, 5), dans lequel ledit récepteur (200) est configuré pour mettre à jour les informations de statut du client (CSI) sur la base dudit traitement, lesquelles informations de statut du client (CSI) comprennent des informations du ou des clients mobiles enregistrés (4, 5) enregistrés comme présents, **caractérisé en ce qu'**une ou plusieurs unités contrôlables (12, 13, 22, 23, 22, 23) dudit système (1) sont configurées pour être commandées selon un premier ensemble prédéfini de règles (RS1, RS 1_1, RS 1_2, RS 1_3) si au moins un client mobile enregistré (4, 5) est enregistré comme présent selon lesdites informations de statut du client (CSI), et dans lequel ladite au moins une unité contrôlable (12, 13, 22, 23, 22, 23) est commandée selon un deuxième ensemble prédéfini de règles (RS2) si aucun client mobile enregistré (4, 5) n'est enregistré comme présent selon lesdites informations de statut du client (CSI), dans lequel lesdites données d'informations d'identifiant de client (CII) comprennent des informations d'une pluralité de clients mobiles enregistrés (4, 5), dans lequel différents ensembles prédéfinis de règles (RS 1_1, RS 1_2, RS 1_3) sont utilisés pour faire fonctionner une ou plusieurs unités contrôlables (12, 13, 22, 23, 32, 33) en fonction du ou des clients mobiles enregistrés (4, 5) qui est / sont déterminés comme présents.
